# EUROPEAN PATENT APPLICATION

(11) **EP 2 418 266 A1**
(43) Date of publication of application: **15.02.2012**
(21) Application number: 10758285.0
(22) Date of filing: 31.03.2010
(51) Int. Cl.: C10G 29/16, B01J 20/02, C10G 29/06, H01M 8/06, H01M 8/10

(54) **DESULFURIZING AGENT PRECURSOR FOR HYDROCARBONS AND METHOD FOR PRODUCING SAME, FIRED DESULFURIZING AGENT PRECURSOR FOR HYDROCARBONS AND METHOD FOR PRODUCING SAME, DESULFURIZING AGENT FOR HYDROCARBONS AND METHOD FOR PRODUCING SAME, METHOD FOR DESULFURIZING HYDROCARBONS, AND FUEL CELL SYSTEM**

(30) Priority: 31.03.2009 JP 2009088376; 31.03.2009 JP 2009088191
(71) Applicant: JX Nippon Oil & Energy Corporation, Chiyoda-ku Tokyo 100-8162 (JP)
(72) Inventor: NAGAYASU, Yoshiyuki, Chiyoda-ku Tokyo 1008162 (JP); MIYAI, Yoshie, Chiyoda-ku Tokyo 1008162 (JP); MATSUMOTO, Takaya, Chiyoda-ku Tokyo 1008162 (JP); ISHIZUKI, Kimika, Chiyoda-ku Tokyo 1008162 (JP)
(74) Representative: Blokland, Arie
(86) International application number: PCT/JP2010/002378
(87) International publication number: WO 2010/113506

(57) **Abstract**

A desulfurizing agent for a hydrocarbon comprises: 10 to 30 percent by mass of a porous inorganic oxide based on the total mass of the desulfurizing agent; 3 to 40 percent by mass of zinc oxide; and 45 to 75 percent by mass of a nickel atom in terms of nickel oxide, wherein the reduction degree of the nickel atom is 50 to 80 percent, and wherein the amount of hydrogen adsorption per unit desulfurizing agent mass is 3.5 to 4.6 ml/g.

## Description

### [TECHNICAL FIELD]

The present invention relates to: a precursor of a desulfurizing agent for a hydrocarbon that is used for a hydrocarbon, particularly, for a raw fuel of fuel cells; a manufacturing method thereof; a calcined precursor of a desulfurizing agent for a hydrocarbon that is obtained by calcinations of the precursor; a manufacturing method thereof; a desulfurizing agent for a hydrocarbon; a manufacturing method thereof; and a manufacturing method of a desulfurizing agent for a hydrocarbon that is used for a fuel cell system. The present invention also relates to a method for desulfurizing a hydrocarbon that contain sulfur compounds with use of the desulfurizing agent and further to a fuel cell system provided with a desulfurizing apparatus for a hydrocarbon for which the desulfurizing agent is used.

### [BACKGROUND ART]

In recent years, new energy technologies are in the spotlight due to environmental problems, and fuel cells are drawing attention as one of the new energy technologies. The fuel cells are capable of directly taking out a free energy change by a combustion reaction of fuel as electrical energy. Thus, the fuel cells feature high energy efficiency. Combined with a feature of emitting no toxic substance, the fuel cells are being developed for various applications. Particularly, polymer electrolyte fuel cells deliver high power density, are compact, and can operate under low temperature.

In general, gas consisting primarily of hydrogen is used as fuel gas for fuel cells. As a raw fuel for obtaining the gas containing hydrogen, a hydrocarbon such as natural gas, LPG, naphtha, and kerosene, alcohol such as methanol and ethanol, ether such as dimethylether, or the like is used. It is commonly practiced to bring these raw fuels that contain carbon and hydrogen into a reforming reaction along with water vapor over a catalyst, into a partial oxidation reaction with use of oxygen-containing gas, or into a autothermal reforming reaction in a system where water vapor and oxygen-containing gas coexist, so as to generate gas containing hydrogen and carbon monoxide and then to obtain fuel for fuel cells further through a process of reducing or removing carbon monoxide.

However, sulfur compounds often exist in these raw fuels as impurities particularly in petroleum-derived raw fuels or as an odorant for leakage detection in a case of natural gas or the like. When these raw fuels are used, the sulfur compounds inevitably get mixed in a hydrogen fuel for fuel cells. Noble metals or metals such as copper are often used in a reduction condition for raw fuel reforming in order to manufacture hydrogen fuel for fuel cells, for processes of removing carbon monoxide, and further as anodic electrode catalysts. There is a problem where sulfur compounds act as a catalytic poison for metal catalysts that are in such a condition, impairing a hydrogen manufacturing process or the catalytic activity of a fuel cell, and where the efficiency of the fuel cells is lowered accordingly. Therefore, it is necessary to fully remove sulfur content contained in raw fuels in order to enable long-term stable use of catalysts used in a hydrogen manufacturing process and further of electrode catalysts of a fuel cell, while maintaining the original performance thereof.

It is necessary to reduce the concentration of sulfur content in a raw fuel for fuel cells to the extent that a catalyst used in a reforming process fully functions. Thus, a desulfurizing process of removing the sulfur content in a raw fuel is basically provided before a hydrogen manufacturing process. Conventionally, the concentration of sulfur content in a raw fuel processed in a desulfurizing process is said to be at most 0.1 mass ppm or at most 0.05 mass ppm (50 mass ppb) for sulfur atoms. However, required performance for the desulfurizing is more restricted in recent years, and the concentration is required to be at most 0.02 mass ppm (20 mass ppb).

A process of hydrodesulfurizing refractory organic sulfur compounds with use of hydrodesulfurization catalysts so as to convert the compounds into hydrogen sulfide for which adsorption removal can easily conducted and then treating the hydrogen sulfide with proper adsorbent has been considered to be appropriate as a method for desulfurizing a raw fuel for fuel cells. However, since technological development is desired where pressure in a fuel cell system is about the atmospheric pressure or 1 MPa at the most, while general hydrodesulfurization catalysts require high hydrogen pressure, a conventional desulfurizing process with use of hydrodesulfurization catalysts cannot be employed in the present circumstances.

Thus, in the development of fuel cell power generation system, research has been conducted for a desulfurizing agent that can fulfill a desulfurizing function sufficiently under low pressure or in the absence of hydrogen, and a desulfurizing agent having nickel loaded on an inorganic support has been suggested. Various studies have been conducted to improve the desulfurizing activity and lifetime thereof. For example, a desulfurizing agent containing at least 95 percent of metal nickel with respect to the entire nickel content is disclosed in the following patent document No. 1. A desulfurizing agent is disclosed in the following patent document No. 2, in which: at least 80 mole percent of nickel components thereof is in a metallic state; and the metal crystallite diameter thereof is at most 4.0 nm. Also, a desulfurizing agent is disclosed in the following patent document No. 3, in which: nickel and copper are loaded on a support; at least 60 percent of the nickel is a metal; and the amount of hydrogen adsorption is at least 15 mmol/g. In these conventional technologies, it is difficult to satisfy both a high degree of nickel reduction (a ratio of the amount of metal nickel to the entire nickel content) and good dispersion of nickel metal particles that are required for improving desulfurizing performance, when only nickel is used as an active metal; thus, copper is used along with nickel as the active metal. A household fuel cell system is assumed to undergo so-called "Daily Start-up/Shut-down (DSS) operation" where the start-up and the shut-down are repeated on a day-to-day basis. With this operation, a desulfurizing agent used in the system undergoes thermal history with repeated temperature-rise and temperature-fall. The above-stated desulfurizing agent having loaded nickel and copper as active metals has a problem where the metal particles easily aggregate together due to the thermal history such that the desulfurizing performance is lowered in a short period of time. Therefore, the development of a desulfurizing agent that does not contain copper is desired.

Meanwhile, the applicant has filed a patent application for a highly-active and long-life desulfurizing agent for kerosene that contains nickel oxide, zinc oxide, and silica and in which carbon deposition is prevented (see the following patent document No. 4). However, further improvement of the performance is desired to meet market needs for higher performance and longer life.

The following patent document No. 5 discloses: a nickel compound including a nickel carbonate or a nickel hydroxy carbonate that is loaded on a silica support; and a catalyst adsorbent containing an alumina promoter and an alkaline earth compound promoter, and describes that the catalyst adsorbent can be activated through a reduction treatment at lower temperature compared to a conventional desulfurizing agent. However, a preferred reduction temperature is 400 degrees Celsius and thus is still high, and further improvement of the performance of a desulfurizing agent obtained thereby is desired.

Furthermore, in a conventional desulfurizing agent for a fuel cell system, a manufacturing process is complicated due to the temperature being high when a precursor is activated by a reduction treatment, such that the manufacturing cost is increased.

[Patent document No. 1] JP 2001-279259
[Patent document No. 2] JP 2005-146054
[Patent document No. 3] JP 2004-75778
[Patent document No. 4] JP 2008-115309
[Patent document No. 5] JP 2006-501065 (published Japanese translation of PCT international publication for patent application)

### [SUMMARY OF THE INVENTION]

### [PROBLEM TO BE SOLVED BY THE INVENTION]

As described above, in a hydrocarbon-based fuel cell system, it has been difficult to maintain satisfactory desulfurization for a long time under low pressure and, particularly, in the absence of hydrogen during a desulfurizing process with use of a conventional desulfurizing agent so that a subsequent hydrogen-fuel manufacturing process and a power generation process can be operated for a long time in a stable manner. Accordingly, the development of a desulfurizing agent has been desired that allows for sufficient removal of the sulfur content in a hydrocarbon, long-term conservation of the desulfurizing performance thereof, and, further, simplification of the manufacturing process.

A purpose of the present invention is to provide a desulfurizing agent for a hydrocarbon that has desulfurizing performance of removing a hydrocarbon, particularly, the sulfur content in kerosene so that the concentration becomes low (about 20 mass ppb) even in the absence of hydrogen, that is excellent in durability, and that allows for simplification of the manufacturing process. Another purpose of the present invention is to provide: a precursor of a desulfurizing agent for a hydrocarbon that is used to obtain the desulfurizing agent; a manufacturing method thereof; a calcined precursor of the desulfurizing agent that is obtained by calcination of the precursor; a manufacturing method thereof; a manufacturing method of the desulfurizing agent; and a fuel cell system that uses, as raw fuels, a hydrocarbon for which the desulfurizing agent is used.

### [MEANS TO SOLVE THE PROBLEM]

As a result of conducting dedicated research regarding the problem, the present inventors have found that a desulfurizing agent for a hydrocarbon can be obtained that has a structure unobtainable by conventional technology and excellent desulfurizing performance and durability by performing a calcination treatment and/or a reduction treatment under specific conditions on a precursor of the desulfurizing agent for a hydrocarbon having specific properties, and have achieved the present invention.

In other words, one embodiment of the present invention is directed to a desulfurizing agent for a hydrocarbon comprising: 10 to 30 percent by mass of a porous inorganic oxide based on the total mass of the desulfurizing agent; 3 to 40 percent by mass of zinc oxide; and 45 to 75 percent by mass of a nickel atom in terms of nickel oxide, wherein the reduction degree of the nickel atom is 50 to 80 percent, and wherein the amount of hydrogen adsorption per unit desulfurizing agent mass is 3.5 to 4.6 ml/g.

In the desulfurizing agent for a hydrocarbon according to the above-stated embodiment, the porous inorganic oxide is preferably silica or alumina.

In the desulfurizing agent for a hydrocarbon according to the above-stated embodiment, the silica is preferably modified with aluminum.

Another embodiment of the present invention is directed to a manufacturing method of a desulfurizing agent for a hydrocarbon comprising: performing a reduction treatment at a temperature of 200-300 degrees Celsius on a desulfurizing agent precursor for a hydrocarbon containing: 10 to 30 percent by mass of a porous inorganic oxide based on the total mass of the desulfurizing agent precursor; 3 to 40 percent by mass of zinc oxide; 45 to 75 percent by mass of a nickel atom in terms of nickel oxide; and a carbon atom, wherein a mole ratio of the carbon atom to the nickel atom is 0.065 to 0.094.

Yet another embodiment of the present invention is directed to a manufacturing method of a desulfurizing agent for a hydrocarbon comprising: manufacturing a calcined precursor by performing a calcination treatment at a temperature of 160-300 degrees Celsius on a desulfurizing agent precursor for a hydrocarbon containing: 10 to 30 percent by mass of a porous inorganic oxide based on the total mass of the desulfurizing agent precursor; 3 to 40 percent by mass of zinc oxide; 45 to 75 percent by mass of a nickel atom in terms of nickel oxide; and a carbon atom, wherein a mole ratio of the carbon atom to the nickel atom is 0.065 to 0.094; and performing a reduction treatment on the calcined precursor at a temperature of 200-300 degrees Celsius.

In the manufacturing method of a desulfurizing agent for a hydrocarbon according to the above-stated embodiment, the porous inorganic oxide is preferably silica or alumina.

In the manufacturing method of a desulfurizing agent for a hydrocarbon according to the above-stated embodiment, the silica is preferably modified with aluminum.

Yet another embodiment of the present invention is directed to a manufacturing method of a desulfurizing agent for a hydrocarbon that is used for a fuel cell system by use of the manufacturing method of a desulfurizing agent for a hydrocarbon, wherein a desulfurization reactor for a fuel cell system is filled with the desulfurizing agent precursor for a hydrocarbon or the calcined precursor in performing the reduction treatment.

Yet another embodiment of the present invention is directed to a hydrocarbon desulfurization method for exposing the desulfurizing agent for a hydrocarbon according to the above-stated embodiment to a hydrocarbon containing a sulfur compound.

In the hydrocarbon desulfurization method according to the above-stated embodiment, the hydrocarbon is preferably kerosene.

Furthermore, yet another embodiment of the present invention is directed to a fuel cell system that uses a hydrocarbon as a raw fuel comprising a hydrocarbon desulfurizing apparatus having a reactor filled with the desulfurizing agent for a hydrocarbon according to the above-stated embodiment.

As a result of conducting dedicated research regarding the problem, the present inventors have found that, by bringing carbon dioxide to coexist in solution for precipitate generation during a precipitation process at the time of manufacturing a precursor of a desulfurizing agent for a hydrocarbon, the precursor can be obtained that has a composition unobtainable by conventional technology. The present inventors have also found that a desulfurizing agent for a hydrocarbon can be obtained that has a structure unobtainable by conventional technology and excellent desulfurizing performance and durability by performing a calcination and/or reduction treatment on the precursor under specific conditions, and have achieved the present invention.

In other words, an embodiment of the present invention is directed to a desulfurizing agent precursor for a hydrocarbon comprising: 10 to 30 percent by mass of a porous inorganic oxide based on the total mass of the desulfurizing agent precursor; 45 to 75 percent by mass of a nickel atom in terms of nickel oxide; and a carbon atom, wherein a mole ratio of the carbon atom to the nickel atom is 0.095 to 0.20.

In the desulfurizing agent precursor for a hydrocarbon according to the above embodiment, the porous inorganic oxide is preferably silica or alumina.

In the desulfurizing agent precursor for a hydrocarbon according to the above embodiment, the porous inorganic oxide is preferably silica modified with aluminum.

The desulfurizing agent precursor for a hydrocarbon according to the above embodiment further comprises 3 to 40 percent by mass of zinc oxide based on the total mass of the desulfurizing agent precursor, preferably.

Another embodiment of the present invention is directed to a calcined desulfurizing agent precursor for a hydrocarbon obtained by performing a calcination treatment on the desulfurizing agent precursor for a hydrocarbon at a temperature of 160-300 degrees Celsius.

Yet another embodiment of the present invention is directed to a desulfurizing agent for a hydrocarbon comprising: 10 to 30 percent by mass of a porous inorganic oxide based on the total mass of the desulfurizing agent; 3 to 40 percent by mass of zinc oxide; and 45 to 75 percent by mass of a nickel atom in terms of nickel oxide, wherein the reduction degree of the nickel atom is 50 to 80 percent, and wherein the amount of hydrogen adsorption per unit desulfurizing agent mass is 4.7 to 7.0 ml/g.

In the desulfurizing agent for a hydrocarbon according to the above embodiment, the porous inorganic oxide is preferably silica or alumina.

In the desulfurizing agent for a hydrocarbon according to the above embodiment, the porous inorganic oxide is preferably silica modified with aluminum.

Yet another embodiment of the present invention is directed to a manufacturing method of the desulfurizing agent precursor for a hydrocarbon according to the above embodiment comprising: precipitating where precipitate containing a nickel compound and a porous inorganic oxide is obtained by preparing a mixed solution by mixing an aqueous solution containing the nickel compound or both the nickel compound and the porous inorganic oxide and/or a precursor thereof and an aqueous solution containing a basic salt, which contains a carbonate group or a bicarbonate group, or both the basic salt and the porous inorganic oxide and/or a precursor thereof; and bringing carbon dioxide to coexist in the mixed solution in the precipitating.

Preferably, the manufacturing method of the desulfurizing agent precursor for a hydrocarbon according to the above embodiment comprises: precipitating where the aqueous solution containing the nickel compound or both the nickel compound and the porous inorganic oxide and/or a precursor thereof further contains a zinc compound and where precipitate containing the nickel compound, the porous inorganic oxide, and the zinc compound is obtained.

Yet another embodiment of the present invention is directed to a manufacturing method of a calcined desulfurizing agent precursor for a hydrocarbon comprising calcining the desulfurizing agent precursor for a hydrocarbon at a temperature of 160-300 degrees Celsius.

Yet another embodiment of the present invention is directed to a manufacturing method of a desulfurizing agent for a hydrocarbon comprising reducing the desulfurizing agent precursor for a hydrocarbon obtained by the above method or the calcined desulfurizing agent precursor for a hydrocarbon at a temperature of 200-300 degrees Celsius.

Yet another embodiment of the present invention is directed to a manufacturing method of a desulfurizing agent for a hydrocarbon that is used for a fuel cell system by use of the above manufacturing method of a desulfurizing agent for a hydrocarbon, wherein the reducing is performed on the desulfurizing agent precursor for a hydrocarbon or the calcined desulfurizing agent precursor for a hydrocarbon with which a desulfurization reactor for a fuel cell system is filled.

Yet another embodiment of the present invention is directed to a hydrocarbon desulfurization method for exposing the desulfurizing agent for a hydrocarbon to a hydrocarbon containing a sulfur compound.

In the hydrocarbon desulfurization method according to the above embodiment, the hydrocarbon is preferably kerosene.

Furthermore, yet another embodiment of the present invention is directed to a fuel cell system that uses a hydrocarbon as a raw fuel comprising a hydrocarbon desulfurizing apparatus having a reactor filled with the desulfurizing agent for a hydrocarbon.

### [ADVANTAGE OF THE PRESENT INVENTION]

According to the present invention, a hydrocarbon, particularly, the sulfur content in kerosene can be effectively removed even in the absence of hydrogen, and a long-life desulfurizing agent for a hydrocarbon can be provided having remarkably-improved endurance time during which constant desulfurizing performance can be maintained. A fuel cell system that has a desulfurizing process of filling with the desulfurizing agent and that uses a hydrocarbon as raw fuels allows for stable and efficient power generation for a long time. Furthermore, the reduction treatment performed at low temperature allows a desulfurizing agent having high desulfurizing performance to be provided, and equipment and stabilization treatment for the reduction treatment performed at high temperature are thus no longer necessary, allowing for simplification of a manufacturing process and cost reduction for a desulfurizing agent.

### [BRIEF DESCRIPTION OF THE DRAWINGS]

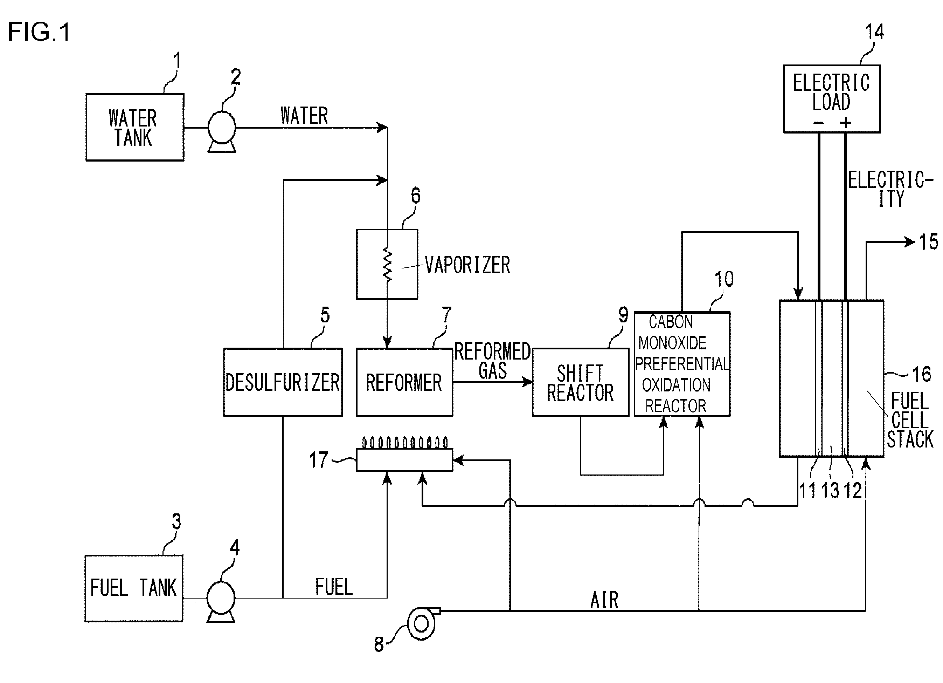

Fig. 1 is a schematic diagram illustrating an example of a fuel cell system according to a first embodiment.

### [BEST MODE FOR CARRYING OUT THE INVENTION]

Described below is a detailed explanation of the preferred embodiments of the present invention.

### (First Embodiment)

A description is now given of a desulfurizing agent for a hydrocarbon according to a first embodiment (hereinafter, sometimes referred to as a "desulfurizing agent according to the first embodiment"). In the subject application, a desulfurizing agent for a hydrocarbon means a desulfurizing agent that has at least one function from among a function of absorbing sulfur compounds contained in the hydrocarbon, a catalytic function of converting the sulfur compounds to be more easily absorbed, and a function of absorbing the converted sulfur compounds.

The amount of porous inorganic oxide contained in the desulfurizing agent according to the first embodiment is 10 to 30 percent by mass, preferably 15 to 30 percent by mass, based on the total mass of the desulfurizing agent. When the amount contained is less than 10 percent by mass, the specific surface area of the desulfurizing agent decreases, and desulfurizing performance and endurance time during which the desulfurizing performance can be maintained, i.e., durability, thus tend to decrease. On the other hand, when the amount contained exceeds 30 percent by mass, the amount of nickel components contained becomes smaller relatively, and the desulfurizing performance and durability of the desulfurizing agent tend to decrease.

The porous inorganic oxide is not particularly limited; however, at least one of silica, alumina, boria, magnesia, zirconia, titania, manganese oxide, etc., a mixture of these, or a composite oxide comprising these components is preferably used. Particularly, from the perspective of preventing carbonaceous materials from being deposited on the desulfurizing agent so that the durability is improved, silica is preferable.

From the perspective of improving the desulfurizing performance and durability of the desulfurizing agent according to the first embodiment, the porous inorganic oxide is preferably alumina.

From the perspective of improving the desulfurizing performance and durability of the desulfurizing agent according to the first embodiment, silica is preferably modified with aluminum in the porous inorganic oxide. The silica modified with aluminum is not particularly limited as long as the silica contains aluminum atoms. However, the aluminum atoms are preferably introduced into the silica in the form of alumina. The alumina may be mixed with silica. A composite oxide comprising silica and alumina components is preferable. The amount of aluminum contained in the silica modified with aluminum is 5 to 20, preferably 7 to 15, in a mole fraction of silica/alumina.

The amount of nickel atoms contained in the desulfurizing agent according to the first embodiment is 45 to 75 percent by mass, preferably 50 to 70 percent by mass, in terms of nickel oxide (NiO) based on the total mass of the desulfurizing agent. When the amount contained is less than 45 percent by mass, the amount of nickel atoms is insufficient, and the desulfurizing performance and durability of the desulfurizing agent thus tend to decrease. On the other hand, when the amount contained exceeds 75 percent by mass, the amount of the porous inorganic oxide contained becomes smaller relatively, and the specific surface area of the desulfurizing agent thus becomes smaller. In addition, the nickel components are more likely to aggregate together and become less dispersed. Thus, the desulfurizing performance and the durability tend to decrease.

The reduction degree of nickel atoms contained in the desulfurizing agent according to the first embodiment is 50 to 80 percent, preferably 60 to 80 percent. When the reduction degree is less than 50 percent, there are not sufficient active species, and the desulfurizing performance and the durability thus tend to become insufficient. When the reduction degree exceeds 80 percent, the nickel metal particles are less dispersed, and the amount of effective active sites is thus insufficient. Thus, the desulfurizing performance and the durability thus tend to become insufficient. The reduction degree of the nickel atoms in the subject application means the ratio (percent) of metal nickel (Ni(O)) to the entire nickel atoms contained in the desulfurizing agent. Measurement of the reduction degree was conducted using a TPR measurement device. In other words, TPR measurement was conducted after a reduction treatment was performed under a predetermined condition in the device, and the reduction degree was calculated based on a quantitative ratio of generated MASS18 (H₂O) to that of an unreduced sample for which the TPR measurement was conducted in the same way.

The amount of hydrogen adsorption per unit desulfurizing agent mass of the desulfurizing agent according to the first embodiment is 3.5 to 4.6 ml/g, preferably 4.0 to 4.6 ml/g. When the amount of hydrogen adsorption is less than 3.5 ml/g, the desulfurizing performance and the durability tend to become insufficient. Meanwhile, it is technically difficult for the amount of hydrogen adsorption to exceed 4.6 ml/g as long as the manufacturing method of the desulfurizing agent for a hydrocarbon according to the first embodiment is used. In the subject application, measurement of the amount of hydrogen adsorption was conducted using an accelerated surface area and porosimetry system (ASAP2020 (product name) by SHIMADZU Corporation). After a hydrogen reduction was performed on a catalyst under a predetermined condition, hydrogen was adsorbed at a temperature of 50 degrees Celsius under vacuum. An adsorption isotherm was then obtained. Then, physically-adsorbed hydrogen was removed by evacuation, and the amount of chemically-adsorbed hydrogen was calculated. In the desulfurizing agent according to the first embodiment, hydrogen is mainly adsorbed on the surfaces of metal nickel particles; thus, the amount of adsorption thereof is used as an indicator that reflects the dispersion of the nickel metal particles.

In addition to the porous inorganic oxide and the nickel atoms, the desulfurizing agent according to the first embodiment desirably contain 3 to 40 percent by mass, preferably 5 to 30 percent by mass, of zinc oxide (ZnO) based on the total mass of the desulfurizing agent. When the zinc oxide is less than 3 percent by mass, an effect of addition of the zinc oxide, which prevents the generation of carbonaceous materials and thus improves the durability of the desulfurizing agent, tends to become insufficient. On the other hand, when the zinc oxide exceeds 40 percent by mass, the contained amounts of the nickel components and the porous inorganic oxide become smaller relatively, and the desulfurizing performance thus tends to decrease. The desulfurizing performance and durability of the desulfurizing agent are improved by containing the zinc oxide in the above-stated range.

The desulfurizing agent according to the first embodiment may contain copper atoms in addition to the nickel atoms as active metal components. However, the contained amount thereof is less than 10 percent by mass, preferably 5 percent by mass at most, and more preferably 1 percent by mass at most in terms of CuO based on the total mass of the desulfurizing agent. Most preferably, the desulfurizing agent according to the first embodiment does not substantially contain copper atoms. The state in which the desulfurizing agent "does not substantially contain copper atoms" means that the desulfurizing agent according to the first embodiment does not contain copper atoms other than those derived from impurities included in raw materials that are used when manufacturing the desulfurizing agent and that desulfurizing agent is manufactured without an intended adding copper atoms. When the desulfurizing agent containing copper atoms of, particularly, at least 10 percent by mass is used in a fuel cell system provided for DSS operation, there is a tendency, due to the thermal history with repeated temperature-rise and temperature-fall, that nickel metal particles containing copper aggregate together progressing deterioration of the desulfurizing activity over time.

A description is now given of a manufacturing method of the desulfurizing agent according to the first embodiment.

Preferably, the desulfurizing agent according to the first embodiment is manufactured by a manufacturing method of a desulfurizing agent comprising a step of performing a reduction treatment at a temperature of 200-300 degrees Celsius on a desulfurizing agent precursor that contains: 10 to 30 percent by mass of porous inorganic oxide; 3 to 40 percent by mass of zinc oxide; 45 to 75 percent by mass of nickel atoms in terms of nickel oxide; and carbon atoms, based on the total mass of the desulfurizing agent precursor, with a mole ratio of the carbon atom to the nickel atom of 0.065 to 0.094. The desulfurizing agent precursor in the subject application yields a desulfurizing agent for a hydrocarbon through a calcination treatment and/or a reduction treatment.

Preferably, the desulfurizing agent according to the first embodiment is manufactured by a manufacturing method of a desulfurizing agent comprising: a step of manufacturing a calcination precursor by performing calcination treatment on the desulfurizing agent precursor at a temperature of 160-300 degrees Celsius; and a step of performing a reduction treatment on the desulfurizing agent precursor at a temperature of 200-300 degrees Celsius.

A description is now given of a desulfurizing agent precursor that is used for manufacturing the desulfurizing agent according to the first embodiment (hereinafter, sometimes referred to as a "precursor according to the first embodiment").

A method of manufacturing the precursor according to the first embodiment is not particularly limited; however, it is preferred to use the following manufacturing method.

In a preferred method of manufacturing the precursor according to the first embodiment, a solution containing a nickel compound and a solution containing a basic salt that contains a carbonate group or a bicarbonate group are mixed in the presence of a porous inorganic oxide and/or a precursor thereof so as to form precipitate of a nickel compound that is poorly soluble in water on the porous inorganic oxide. Preferably, the porous inorganic oxide and/or the precursor thereof are/is dissolved or suspended in the solution containing the nickel compound and/or in the solution containing the basic salt.

More specifically, the precipitate of the nickel compound is formed on the porous inorganic oxide by mixing the porous inorganic oxide and/or the precursor thereof in the solution containing the nickel compound and then dropping the basic salt solution containing the carbonate group or the bicarbonate group in the mixture, or by mixing the porous inorganic oxide and/or the precursor thereof in the basic salt solution and then dropping the solution containing the nickel compound in the mixture. The latter method is more preferred.

As a silica source in the case of using silica as the porous inorganic oxide, at least one selected from a silica powder, a silica sol, and a silica gel is preferably used. The average particle diameter of these particles is preferably 1-100 nm and is more preferably 1-25 nm.

An alumina source in the case of using alumina as the porous inorganic oxide includes hydrated alumina such as an alumina powder, pseudo-boehmite, boehmite alumina, bayerite, gibbsite, etc.

In the case of using silica modified with aluminum as the porous inorganic oxide, the above-stated compound is used as a silica source, and, in addition to the compounds used as the alumina source, aluminum chloride, aluminum nitrate, aluminum sulfate, aluminum acetate, aluminum hydroxide, etc., are used as an aluminum source.

Nickel chloride, nickel nitrate, nickel sulfate, nickel acetate, etc., are preferred as a nickel compound used as a raw material in a method of manufacturing the desulfurizing agent precursor according to the first embodiment.

As the basic salt that contains the carbonate group or the bicarbonate group and that is used as a precipitant, sodium carbonate, potassium carbonate, lithium carbonate, ammonium bicarbonate, sodium hydrogen carbonate, potassium hydrogen carbonate, lithium hydrogen carbonate, ammonium hydrogen carbonate, etc., are preferably used. A nickel compound containing the carbonate group is generated in precipitate generated by using these salts as precipitants, i.e., in the precursor according to the first embodiment.

From the perspective of ensuring generation of the nickel compound precipitate, the amount of the basic salt is desired to be 1.0 to 1.5 times, preferably 1.1 to 1.4 times, the equivalent of the nickel compound that is used. The pH of the mixture of the solution containing the generated nickel compound and the solution containing the basic salt is preferably set to be about 7 to 9.

The temperature of the solution when forming precipitate by mixing the solution containing the nickel compound and the solution containing the basic salt is desired to be 50 to 100 degrees Celsius and is preferably 79 to 90 degrees Celsius.

Carbon atoms contained in the precursor according to the first embodiment are mainly derived from the carbon group that forms the nickel compound containing nickel atoms. The nickel compound that contains the carbon group (hereinafter, sometimes referred to as a "nickel compound containing the carbon group") includes nickel carbonate, nickel hydroxy-carbonate, etc. The desulfurizing agent precursor according to the first embodiment contains a nickel compound such as nickel hydroxide, nickel oxide, etc., in addition to the nickel compound containing the carbon group.

The mole ratio of the carbon atom to the nickel atom (C/Ni) of the precursor according to the first embodiment is 0.065 to 0.094 and is preferably 0.070 to 0.092. It means that the larger the C/Ni value, the larger the ratio of the nickel compound containing the carbon group to the entire nickel compounds. When the value is less than 0.065, the desulfurizing performance of a desulfurizing agent obtained from the precursor tends not to be sufficient. On the other hand, it is difficult to obtain a precursor according to the first embodiment with the C/Ni value of over 0.094. A desulfurizing agent obtained from the precursor with the C/Ni value in the above-stated range has excellent desulfurizing performance and durability.

Preferably, the solution containing the nickel compound further contains a zinc compound in the manufacturing of the precursor according to the first embodiment, and the manufacturing comprises a precipitation process of obtaining precipitate that contains the nickel compound, the porous inorganic oxide, and the zinc compound. As a zinc compound used in this case, zinc chloride, zinc nitrate, zinc sulfate, zinc acetate, zinc hydroxide, etc., are preferred.

After forming the nickel compound precipitate on the porous inorganic oxide, a generated solid product is filtered and then washed by an ion-exchanged water or the like. When the washing is not sufficient, chlorine, a nitric radical, a sulfate radical, an acetic acid radical, a sodium ion, a potassium ion, etc., are left on a catalyst, adversely affecting the performance of the desulfurizing agent. Thus, thorough washing is carried out. When washing cannot be carried out sufficiently with an ion-exchanged water, an aqueous solution of a base such as ammonia, sodium carbonate, sodium hydrogen carbonate, potassium carbonate, etc., may be used as a wash solution. In this case, it is preferred to wash the solid product first with the aqueous solution of a base and then with an ion-exchanged water. Particularly, a residual sodium ion adversely affects the performance of the desulfurizing agent. Thus, it is desired to carry out washing until the amount of remaining sodium becomes at most 0.1 percent by mass, preferably, at most 0.05 percent by mass.

The solid product after the washing is pulverized and then dried. A drying method is not particularly limited and can include, for example, drying by heating in air, degassed drying under reduced pressure, a spray drying method, etc. When drying by heating is carried out in an air atmosphere, it is preferred to carry out the drying for 5 to 15 hours at a temperature of 100 to 150 degrees Celsius.

The above-stated precursor according to the first embodiment may be directly provided for desulfurizing a hydrocarbon or may serve as the desulfurizing agent according to the first embodiment after a reduction treatment. From a perspective of improving the desulfurizing performance and durability of the desulfurizing agent, it is preferred to perform the calcination treatment under a specific condition before the reduction treatment so as to obtain a calcined precursor and then to perform the reduction treatment so as to obtain the desulfurizing agent according to the first embodiment. In the subject application, the calcined precursor is the precursor according to the first embodiment processed with the calcination treatment.

The calcined precursor that is used for manufacturing the desulfurizing agent according to the first embodiment (hereinafter, sometimes referred to as an "calcined precursor according to the first embodiment") is obtained by calcining the precursor according to the first embodiment at a temperature of 160-300 degrees Celsius, preferably at a temperature of 200-300 degrees Celsius, and more preferably at a temperature of 220-300 degrees Celsius, preferably in an atmosphere containing molecular oxygen, and more preferably in an air atmosphere. When the calcination temperature is below 160 degrees Celsius, the effects obtained by the calcination tend not to be sufficient. On the other hand, when the calcination temperature is above 300 degrees Celsius, the desulfurizing performance and durability of the desulfurizing agent obtained by performing the reduction treatment on the calcined precursor according to the first embodiment tend not to be improved sufficiently. Although the calcination time varies depending on the calcination temperature, it is desired that the calcination time be generally 0.1 to 10 hours, preferably 1 to 5 hours. When washing after the precipitation is not sufficient in manufacturing the above-stated desulfurizing agent precursor according to the first embodiment, washing may be carried out after the calcination treatment. An ion-exchanged water or the above-stated aqueous solution of a base can also be used in this case.

The details of the structure of the nickel compound contained in the precursor according to the first embodiment are not clear; however, a part of the nickel compound containing the carbon group that is contained in the precursor according to the first embodiment and a part of the nickel hydroxide are converted into nickel oxide through a decomposition reaction.

The precursor according to the first embodiment or the calcined precursor according to the first embodiment can be directly provided for desulfurizing a hydrocarbon; however, it is preferred to perform the reduction treatment by the manufacturing method of the desulfurizing agent according to the first embodiment so as to obtain the desulfurizing agent according to the first embodiment from a perspective of improving the desulfurizing performance and durability of the desulfurizing agent. The reduction treatment is desirably performed at a temperature of 150-300 degrees Celsius, preferably at a temperature of 200-300 degrees Celsius, and more preferably at a temperature of 250-300 degrees Celsius under hydrogen flow. Although the reduction treatment time varies depending on the reduction treatment temperature, it is desired that the reduction treatment time be generally 0.1 to 15 hours, preferably 2 to 10 hours.

When manufacturing a desulfurizing agent for a hydrocarbon for a fuel cell system by using the manufacturing method of the desulfurizing agent according to the first embodiment, it is preferred to fill a desulfurization reactor for a fuel cell system with the precursor according to the first embodiment or the calcined precursor according to the first embodiment and then perform the reduction treatment. A conventional reduction treatment for a desulfurizing agent precursor or a calcined precursor is typically performed at a temperature of about 350-450 degrees Celsius in a hydrogen atmosphere. Therefore, it is often difficult to perform the reduction treatment at a location of manufacture of the fuel cell system due to an equipment-related problem. The operating temperature of a desulfurization reaction apparatus that constitutes the fuel cell system is typically 100-260 degrees Celsius. Due to the design thereof, it is often difficult to fill a reactor of the reaction apparatus with the desulfurizing agent precursor or the calcined precursor and perform the reduction treatment at a temperature of about 350-450 degrees Celsius with use of the apparatus. Therefore, the reduction treatment is generally preformed on desulfurizing agent precursors or calcined precursors in a bulk state (a state where individual desulfurization reactors for fuel cell systems are not filled with desulfurizing agent precursors or calcined precursors) at catalyst makers or the like having equipment that allows for the reduction treatment at high temperature. Activated desulfurizing agents in a bulk state are transferred to the location of manufacture of a fuel cell system. Since activated desulfurizing agents have a problem of becoming deactivated when exposed to the air and a safety-related problem, a so-called stabilization treatment of slightly oxidizing only the surface layer thereof is generally performed after the reduction treatment, and the activated desulfurizing agents are then shipped. At the location of manufacture of the fuel cell system, individual desulfurization reactors for fuel cell systems are filled with the activated desulfurizing agents, and the reduction treatment is performed at relatively low temperature to remove the stabilization-treated layer for reactivation.

In the manufacturing method of the desulfurizing agent according to the first embodiment, the desulfurizing agent can be obtained that has high desulfurizing performance and durability by performing the reduction treatment on the precursor according to the first embodiment or on the calcined precursor according to the first embodiment at a relatively low temperature of at most 300 degrees Celsius, compared to that of conventional technology. Therefore, these precursors are transferred to the location of manufacture of the fuel cell system without performing the reduction treatment or the stabilization treatment at the location of manufacture of the precursors. Individual desulfurization reactors for fuel cell systems are then filled with the precursors, allowing the precursors to be activated by the reduction process at low temperature. With this, two processes, the reduction treatment and stabilization treatment that are performed at high temperature in a bulk state, are no longer necessary. Thus, the manufacturing costs of the desulfurizing agent can be reduced accordingly.

The shape of the precursor according to the first embodiment is not particularly limited, and the precursor may be a powder as obtained or may be molded into a molded product. From a perspective of reducing a pressure loss of a hydrocarbon in a reactor in desulfurizing the hydrocarbon or preventing channeling, the desulfurizing agent is preferably a molded product, and the precursor thereof is also preferably a molded product. As a molding method, tablet compression may be used, and an obtained molded product may be sized in a proper range after pulverization. Furthermore, extrusion molding may be used. A proper binder may be blended for molding. The binder is not particularly limited; however, alumina, silica, titania, zirconia, carbon black, mixture thereof, or the like is used. The amount of the binder to be blended is normally at most 30 percent by mass, preferably at most 10 percent by mass with respect to the total mass including the mass of the precursor according to the first embodiment. Also, a molding auxiliary made of organic materials may be also used for molding. The calcination treatment and/or reduction treatment are performed on the precursor according to the first embodiment molded into a molded product, and the precursor becomes the desulfurizing agent according to the first embodiment as a molded product. The calcined precursor according to the first embodiment may be molded into a molded product, and the desulfurizing agent according to the first embodiment as a molded product may be obtained by performing the reduction treatment on the molded calcined precursor.

A hydrocarbon to be desulfurized by using the desulfurizing agent according to the first embodiment include natural gas, LPG, naphtha, kerosene, etc. However, kerosene is the most preferable. A case in which kerosene is used is now described in detail in the following.

Kerosene used as a raw material in the hydrocarbon desulfurization method according to the first embodiment contains sulfur content and may be one of those used as commonly-used fuel. It is desired that the concentration of the sulfur content in the kerosene be 0.1 to 30 mass ppm, preferably 1 to 25 mass ppm, and more preferably 5 to 20 mass ppm. From a performance perspective, the amount of the sulfur content contained in the kerosene is preferred to be small. However, carrying out desulfurization to reduce the sulfur content to be less than 0.1 mass ppm in a conventional petroleum refinery process requires a large equipment cost and operation cost and is thus not preferable. On the other hand, when the sulfur content exceeds 30 percent by mass, the desulfurizing agent according to the first embodiment used in the desulfurization method according to the first embodiment fails to maintain the desulfurizing performance in a short period of time, and this is thus not preferable. The sulfur content in the first embodiment is a generic term used to refer to various types of sulfur, inorganic sulfur compounds, and organic sulfur compounds that are normally contained in a hydrocarbon. The concentration of the sulfur content is indicated in kerosene mass standard in terms of sulfur atoms, and a value quantified by a gas chromatograph sulfur chemiluminescence detector (GC-SCD) is used.

When kerosene is used as a raw material in the hydrocarbon desulfurization method according to the first embodiment, the kerosene may be exposed to the desulfurizing agent according to the first embodiment in any of phases: a liquid phase; a gas phase; and a gas-liquid mixed phase. However, a liquid phase is preferably employed from perspectives of preventing deterioration of the desulfurizing performance over time due to the deposition of carbonaceous materials on the desulfurizing agent and of maintaining the desulfurizing performance for a long period of time.

When kerosene is used as a hydrocarbon in the hydrocarbon desulfurization method according to the first embodiment, the operating pressure is preferably low being in a range of normal pressure to 0.9 Mpa, particularly normal pressure to 0.7 Mpa, in consideration of the economic efficiency, safety, etc., of a fuel cell system. The reaction temperature is not particularly limited as long as the concentration of sulfur content can be lowered at the temperature. However, in consideration of the startup of an apparatus, it is preferred that the apparatus operates effectively even at low temperature, and in consideration of the steady state, the temperature is preferred to be 0 to 400 degrees Celsius. More preferably a temperature of 0 to 300 degrees Celsius, particularly 100 to 260 degrees Celsius, is preferably employed. Selecting such a condition allows kerosene to be kept in a liquid state. When LHSV is too high, desulfurization efficiency is lowered. When LHSV is too low, the apparatus becomes too large. Therefore, LHSV is set to be in a proper range. For LSHV, a range of 0.01 to 15 h⁻¹ is preferred, a range of 0.05 to 5 h⁻¹ is more preferred, and a range of 0.1 to 3 h⁻¹ is particularly preferred. The desulfurization method according to the first embodiment is **characterized in that** the sulfur content in kerosene can be sufficiently desulfurized even in the absence of hydrogen. However, a small amount of hydrogen may be introduced. The flow rate at that time is, for example, 0.05 to 1.0 NL per 1 g of kerosene.

The form of a desulfurizing apparatus used for the hydrocarbon desulfurization method according to the first embodiment is not particularly limited; however, for example, a flow-type fixed-bed system can be used. The shape of the desulfurizing apparatus can be any publicly-known shapes, such as a cylindrical shape, a tabular shape, etc., according to a purpose of each process.

When kerosene is used as a raw material in the hydrocarbon desulfurization method according to the first embodiment, the concentration of sulfur content contained in the kerosene can be lowered to be at most 20 mass ppb in the absence of hydrogen.

A case in which kerosene is used as a raw fuel in a fuel cell system that uses the hydrocarbon according to the first embodiment is now described in detail in the following.

Kerosene with a sulfur content concentration preferably desulfurized to be about 20 mass ppb at most is then served for a reforming reaction process, and gas that is rich in hydrogen is produced. The reforming reaction process is not particularly limited. However, autothermal reforming or the like can be used that carries out a steam reforming reaction where a raw fuel is reformed by a high temperature treatment with water vapor over a catalyst along with water vapor, a partial oxidation reaction with use of oxygen-containing gas, or a autothermal reforming reaction in a system where water vapor and oxygen-containing gas coexist. A commonly-used catalyst to be used is the one containing ruthenium. A reaction condition of the reforming reaction process is not limited; however, a reaction temperature is preferably 200 to 1000 degrees Celsius, and 500 to 850 degrees Celsius is particularly preferred. Reaction pressure is preferably normal pressure to 1 Mpa, and normal pressure to 0.2 Mpa is particularly preferred. The LSHV is preferably 0.01 to 40 h⁻¹, and 0.1 to 10 h⁻¹ is particularly preferred.

Mixed gas containing carbon monoxide and hydrogen that is obtained through the reforming reaction process can be directly used as fuel for fuel cells in the case of a solid oxide fuel cell or the like. For a fuel cell such as a phosphoric acid fuel cell and a polymer electrolyte fuel cell that requires removal of impurities, particularly carbon monoxide, included in fuel gas, the mixed gas is provide for a shift reaction process in order to reduce carbon monoxide content.

The shift reaction process is a process of causing carbon monoxide and water to react so as to convert the carbon monoxide and water into hydrogen and carbon dioxide. The shift reaction process reduces the carbon monoxide content in the mixed gas to be 2 volume percent or less, preferably 1 volume percent or less, and more preferably 0.5 volume percent or less with use of a catalyst containing, e.g., iron-chrome mixed oxide, copper-zinc mixed oxide, platinum, ruthenium, iridium, etc. A condition of the shift reaction is not necessarily limited by, e.g., the composition of reformed gas to be used as a raw fuel; however, the reaction temperature is preferably 120 to 500 degrees Celsius, and 150 to 450 degrees Celsius is particularly preferred. The pressure is preferably normal pressure to 1 Mpa, and normal pressure to 0.2 Mpa is particularly preferred. GSHV is preferably 100 to 50000 h⁻¹, and 300 to 10000 h⁻¹ is particularly preferred. In the shift reaction process, two reactors, a high-temperature shift reactor and a low-temperature shift reactor, may be provided in series. An iron-chrome based catalyst and a copper-zinc based catalyst or the like are preferably used for the high-temperature shift reactor and the low-temperature shift reactor, respectively. Normally, the mixed gas in this state can be used as fuel in the phosphoric acid fuel cell.

It is necessary to further reduce the carbon monoxide concentration in the polymer electrolyte fuel cell. Thus, it is desired to provide a process of further removing carbon monoxide. The process is not particularly limited, and various methods such as an adsorption separation method, a hydrogen separation membrane method, a carbon monoxide preferential oxidation process can be used. However, it is particularly preferred to employ a process that uses a carbon monoxide preferential oxidation reaction from the aspects of miniaturization and economic efficiency of an apparatus. In this process, oxygen in an amount of 0.5 to 10 fold moles, preferably 0.7 to 5 fold moles, and more preferably 1 to 3 fold moles relative to the number of moles of the remaining carbon monoxide is added while using a catalyst containing iron, cobalt, nickel, ruthenium, rhodium, palladium, osmium, iridium, platinum, zinc, silver, gold, or the like, so that the carbon monoxide is preferentially converted to carbon dioxide. With this, the concentration of the carbon monoxide is reduced. A reaction condition of the method is not limited; however, a reaction temperature is preferably 80 to 350 degrees Celsius, and 100 to 300 degrees Celsius is particularly preferred. The pressure is preferably normal pressure to 1 Mpa, and normal pressure to 0.2 Mpa is particularly preferred. The GSHV is preferably 1000 to 50000 h⁻¹, and 3000 to 30000 h⁻¹ is particularly preferred. In this case, causing the carbon monoxide to react with coexisting hydrogen concurrently with the oxidation of the carbon monoxide so as to produce methane allows the carbon monoxide concentration to be reduced.

A fuel cell system is described in detail in the following, using a polymer electrolyte fuel cell as an example with reference to Fig. 1.

A raw fuel (kerosene) in a fuel tank 3 flows into a desulfurizer 5 via a fuel pump 4. If necessary, hydrogen-containing gas from a carbon monoxide preferential oxidation reactor 11 or a shift reactor 9 can be added at this time. The desulfurizer 5 is filled with the desulfurizing agent according to the first embodiment. The fuel having been desulfurized in the desulfurizer 5 is mixed with water supplied from a water tank 1 via a water pump 2 and then introduced into a vaporizer 6 and fed into a reformer 7.

The reformer 7 is warmed with a warming burner 17. Anode off-gas from a fuel cell stack 16 is mainly used as the fuel for the warming burner 17. However, fuel discharged from the fuel pump 4 can be used to replenish the fuel for the warming burner 17, if necessary. A nickel based catalyst, a ruthenium based catalyst, and a rhodium based catalyst can be used as a catalyst to fill the reformer 7.

Allowing the gas containing hydrogen and carbon monoxide that is produced in this manner to sequentially pass through the shift reactor 9 and a carbon monoxide preferential oxidation reactor 10 reduces the carbon monoxide concentration to an extent that the properties of a fuel cell is not adversely affected.

The fuel cell stack 16 comprises an anode 11, a cathode 12, and a polymer electrolyte 13. The fuel gas containing high purity hydrogen obtained by the above methods and air supplied from an air blower 8 are introduced to the anode and the cathode, respectively, after being subjected to an appropriate humidifying treatment, if necessary (a humidifying apparatus is not shown). A reaction where hydrogen gas becomes protons and then releases electrons proceeds at the anode, and a reaction where oxygen gas obtains electrons and protons and then becomes water proceeds at the cathode at this time. In order to promote these reactions, platinum black, a Pt or Pt-Ru alloy catalyst supported on active carbon, etc., are used for the anode, while platinum black, a Pt catalyst supported on active carbon, etc., are used for the cathode. In general, both of the catalysts for the anode and the cathode are formed into porous catalyst layers along with polytetrafluoroethylene, a low molecular weight polymer electrolyte membrane material, active carbon, and the like, if necessary.

The porous catalyst layers are laminated on the both sides of a polymer electrolyte membrane that is known as product names such as Nafion (registered trademark, Du Pont Kabushiki Kaisha), Gore (JAPAN GORE-TEX INC.), Flemion (ASAHI GLASS CO., LTD., registered trademark), Aciplex (Asahikasei Corporation), etc., so as to form an MEA (Membrane Electrode Assembly). Furthermore, the MEA is sandwiched by separators that comprise a metal material, graphite, a carbon composite and that have a gas feeding function, a current collecting function, a draining function that is particularly important for the cathode, etc., so as to assemble a fuel cell. An electric load 14 is electrically connected to the anode and the cathode. The anode off-gas is consumed in the humidifying burner 17. The cathode off-gas is discharged from an exhaust 15.

### (Second Embodiment)

A description is now given of a precursor of a desulfurizing agent for a hydrocarbon according to a second embodiment (hereinafter, sometimes referred to as a "desulfurizing agent precursor according to the second embodiment"). The desulfurizing agent precursor in the subject application yields a desulfurizing agent for a hydrocarbon through a calcination treatment and/or a reduction treatment. The precursor of the desulfurizing agent for a hydrocarbon according to the second embodiment contains: (A) porous inorganic oxide; (B) nickel atoms; and (C) carbon atoms. A detailed description is now given of each of the configurations in the following.

### (A) porous inorganic oxide

The amount of porous inorganic oxide contained in the desulfurizing agent precursor according to the second embodiment is 10 to 30 percent by mass, preferably 15 to 30 percent by mass, based on the total mass of the desulfurizing agent precursor. When the amount contained is less than 10 percent by mass, the specific surface area of the desulfurizing agent that can be obtained decreases, and desulfurizing performance and endurance time during which the desulfurizing performance can be maintained, i.e., durability, thus tend to decrease. On the other hand, when the amount contained exceeds 30 percent by mass, the amount of nickel components contained becomes smaller relatively, and the desulfurizing performance and durability of the desulfurizing agent tend to decrease.

The porous inorganic oxide is not particularly limited; however, at least one of silica, alumina, boria, magnesia, zirconia, titania, manganese oxide, etc., a mixture of these, or a composite oxide comprising these components is preferably used. Particularly, from the perspective of preventing carbonaceous materials from being deposited on the desulfurizing agent so that the durability is improved, silica is preferable.

From the perspective of increasing the mole ratio (C/Ni) of the carbon atoms and the nickel atoms in the desulfurizing agent precursor according to the second embodiment, the porous inorganic oxide is preferably alumina.

From the perspective of further increasing the C/Ni, the porous inorganic oxide is preferably silica modified with aluminum. The silica modified with aluminum is not particularly limited as long as the silica contains aluminum atoms. However, the aluminum atoms are preferably introduced into the silica in the form of alumina. The alumina may be mixed with silica. A composite oxide comprising silica and alumina components is preferable. The amount of aluminum contained in the silica modified with aluminum is 5 to 20, preferably 7 to 15, in a mole fraction of silica/alumina.

### (B) nickel atoms

The amount of nickel atoms contained in the desulfurizing agent precursor according to the second embodiment is 45 to 75 percent by mass, preferably 50 to 70 percent by mass, in terms of nickel oxide (NiO) based on the total mass of the desulfurizing agent precursor. When the amount contained is less than 45 percent by mass, the amount of nickel atoms is insufficient, and the desulfurizing performance and durability of the desulfurizing agent thus obtained therefore tend to decrease. On the other hand, when the amount contained exceeds 75 percent by mass, the amount of the porous inorganic oxide contained becomes smaller relatively, and the specific surface area of the desulfurizing agent thus becomes smaller. In addition, the nickel components are more likely to aggregate together and become less dispersed. Thus, the desulfurizing performance and the durability tend to decrease.

### (C) carbon atoms

Carbon atoms contained in the desulfurizing agent precursor according to the second embodiment are mainly derived from a carbon group that forms a nickel compound containing nickel atoms. The nickel compound that contains the carbon group (hereinafter, sometimes referred to as a "nickel compound containing the carbon group") includes nickel carbonate, nickel hydroxy-carbonate, etc. The nickel compound containing the carbon group is produced in the course of manufacturing the desulfurizing agent precursor according to the second embodiment. The desulfurizing agent precursor according to the second embodiment contains a nickel compound such as nickel hydroxide, nickel oxide, etc., in addition to the nickel compound containing the carbon group.

The mole ratio of the carbon atom to the nickel atom (C/Ni) of the desulfurizing agent precursor according to the second embodiment is 0.095 to 0.20 and is preferably 0.100 to 0.15. It means that the larger the C/Ni value, the larger the ratio of the nickel compound containing the carbon group to the entire nickel compounds. When the value is less than 0.095, the desulfurizing performance of a desulfurizing agent obtained from the desulfurizing agent precursor tends not to be sufficient. On the other hand, it is difficult to obtain a desulfurizing agent precursor with the C/Ni value of over 0.20. A desulfurizing agent obtained from the precursor with the C/Ni value in the above-stated range has excellent desulfurizing performance and durability.

In addition to the porous inorganic oxide, the nickel atoms, and the carbon atoms, the desulfurizing agent precursor according to the second embodiment desirably contain 3 to 40 percent by mass, preferably 5 to 30 percent by mass, of zinc oxide (ZnO) based on the total mass of the desulfurizing agent precursor. When the zinc oxide is less than 3 percent by mass, an effect of addition of the zinc oxide, which prevents the generation of carbonaceous materials and thus improves the durability of the desulfurizing agent, tends to become insufficient. On the other hand, when the zinc oxide exceeds 40 percent by mass, the contained amounts of the nickel components and the porous inorganic oxide become smaller relatively, and the desulfurizing performance thus tends to decrease. The desulfurizing performance and durability of the desulfurizing agent obtained from the precursor are improved by containing the zinc oxide in the above-stated range.

The above-stated desulfurizing agent precursor according to the second embodiment may be directly provided for desulfurizing a hydrocarbon or may serve as the desulfurizing agent according to the second embodiment after a reduction process. From a perspective of improving the desulfurizing performance and durability of the desulfurizing agent, it is preferred to perform the calcination treatment under a specific condition before the reduction treatment so as to obtain a calcined desulfurizing agent precursor according to the second embodiment (hereinafter, sometimes referred to as a "calcined precursor according to the second embodiment") and then perform the reduction treatment so as to obtain the desulfurizing agent according to the second embodiment. In the subject application, the calcined desulfurizing agent precursor is the desulfurizing agent precursor according to the second embodiment treated with the calcination treatment.

The calcined precursor according to the second embodiment is obtained by calcining the desulfurizing agent precursor according to the second embodiment at a temperature of 160-300 degrees Celsius, preferably at a temperature of 200-300 degrees Celsius, and more preferably at a temperature of 220-290 degrees Celsius, preferably in an atmosphere containing molecular oxygen, and more preferably in an air atmosphere. When the calcination temperature is below 160 degrees Celsius, the effects obtained by the calcination tend not to be sufficient. On the other hand, when the calcination temperature is above 300 degrees Celsius, the desulfurizing performance and durability of the desulfurizing agent obtained by performing the reduction treatment on the calcined precursor tend not to be improved sufficiently.

The details of the structure of the nickel compound contained in the calcined precursor according to the second embodiment are not clear; however, a part of the nickel compound containing the carbon group that is contained in the desulfurizing agent precursor according to the second embodiment and a part of the nickel hydroxide are converted into nickel oxide through a decomposition reaction.

A description is now given of a desulfurizing agent for a hydrocarbon according to the second embodiment (hereinafter, sometimes referred to as a "desulfurizing agent according to the second embodiment"). In the subject application, a desulfurizing agent for a hydrocarbon means a desulfurizing agent that has at least one function from among a function of adsorbing sulfur compounds contained in the hydrocarbon, a catalytic function of converting the sulfur compounds to be more easily adsorbed, and a function of adsorbing the converted sulfur compounds.

The amount of porous inorganic oxide contained in the desulfurizing agent according to the second embodiment is 10 to 30 percent by mass, preferably 15 to 30 percent by mass, based on the total mass of the desulfurizing agent. When the amount contained is less than 10 percent by mass, the specific surface area of the desulfurizing agent that can be obtained decreases, and desulfurizing performance and endurance time during which the desulfurizing performance can be maintained, i.e., durability, thus tend to decrease. On the other hand, when the amount contained exceeds 30 percent by mass, the amount of nickel components contained becomes smaller relatively, and the desulfurizing performance and durability of the desulfurizing agent tend to decrease. An explanation regarding the composition of the porous inorganic oxide is a repeat of the corresponding explanation regarding the above-stated desulfurizing agent precursor according to the second embodiment and is thus omitted.

An explanation regarding the contained amount of nickel atoms that constitute the desulfurizing agent according to the second embodiment is a repeat of the above-stated corresponding explanation regarding the desulfurizing agent precursor according to the second embodiment and is thus omitted.

The reduction degree of nickel atoms contained in the desulfurizing agent according to the second embodiment is 50 to 80 percent, preferably 60 to 80 percent. When the reduction degree is less than 50 percent, there are not sufficient active species, and the desulfurizing performance and the durability thus tend to become insufficient. When the reduction degree exceeds 80 percent, the nickel metal particles are less dispersed, and the amount of effective active sites is thus insufficient. Thus, the desulfurizing performance and the durability thus tend to become insufficient. The reduction degree of the nickel atoms in the subject application means the ratio (percent) of metal nickel (Ni(O)) to the entire nickel atoms contained in the desulfurizing agent. Measurement of the reduction degree was conducted using a TPR measurement device. In other words, TPR measurement was conducted after a reduction treatment was performed under a predetermined condition in the device, and the reduction degree was calculated based on a quantitative ratio of generated MASS18 (H₂O) to that of a sample for which the TPR measurement was conducted in the same way; the reduction treatment, however, was not performed on the sample.

The amount of hydrogen adsorption per unit desulfurizing agent mass of the desulfurizing agent according to the second embodiment is 4.7 to 7.0 ml/g, preferably 5.0 to 6.7 ml/g, and further preferably 5.5 to 6.7 ml/g. The amount of hydrogen adsorption of at least 4.7 ml/g is more preferred in terms of improving the desulfurizing performance and the durability. Meanwhile, it is technically difficult for the amount of hydrogen adsorption to exceed 7.0 ml/g as long as the manufacturing method of the desulfurizing agent for a hydrocarbon according to the second embodiment is used. In the subject application, measurement of the amount of hydrogen adsorption was conducted using the following method. After a hydrogen reduction was performed on a catalyst under a predetermined condition with use of the accelerated surface area and porosimetry system (ASAP2020 by SHIMADZU Corporation), hydrogen was adsorbed at a temperature of 50 degrees Celsius under vacuum. An adsorption isotherm was then obtained. Then, physically-adsorbed hydrogen was removed by evacuation, and the amount of hydrogen adsorbed on a metal (the amount of chemically-adsorbed hydrogen) was calculated. In the desulfurizing agent according to the second embodiment, hydrogen is mainly adsorbed on the surfaces of metal nickel particles; thus, the amount of adsorption thereof is used as an indicator that reflects the dispersion of the nickel metal particles.

The desulfurizing agent according to the second embodiment preferably contains zinc oxide. However, an explanation regarding the contained amount thereof is a repeat of the above-stated corresponding explanation regarding the desulfurizing agent precursor according to the second embodiment and is thus omitted.

The desulfurizing agent according to the second embodiment may contain copper atoms in addition to the nickel atoms as active metal components. However, the contained amount thereof is less than 10 percent by mass, preferably 5 percent by mass at most, and more preferably 1 percent by mass at most in terms of CuO based on the total mass of the desulfurizing agent. Most preferably, the desulfurizing agent according to the second embodiment does not substantially contain copper atoms. The state in which the desulfurizing agent "does not substantially contain copper atoms" means that the desulfurizing agent according to the second embodiment does not contain copper atoms other than those derived from impurities included in raw materials that are used when manufacturing the desulfurizing agent and that desulfurizing agent is manufactured without an intended adding copper atoms. When the desulfurizing agent containing copper atoms of, particularly, at least 10 percent by mass is used in a fuel cell system provided for DSS operation, there is a tendency, due to the thermal history with repeated temperature-rise and temperature-fall, that nickel metal particles containing copper aggregate together progressing deterioration of the desulfurizing activity over time.

A method of manufacturing the desulfurizing agent precursor according to the second embodiment is not particularly limited; however, it is preferred to use the following manufacturing method of the desulfurizing agent precursor according to the second embodiment.

In a method of manufacturing the desulfurizing agent precursor according to the second embodiment, a solution containing a nickel compound and a solution containing a basic salt that contains a carbonate group or a bicarbonate group are mixed in the presence of a porous inorganic oxide and/or a precursor thereof so as to form precipitate of a nickel compound that is poorly soluble in water on the porous inorganic oxide. Preferably, the porous inorganic oxide and/or the precursor thereof are/is dissolved or suspended in the solution containing the nickel compound and/or in the solution containing the basic salt.

More specifically, the precipitate of the nickel compound is formed on the porous inorganic oxide by mixing the porous inorganic oxide and/or the precursor thereof in the solution containing the nickel compound and then dropping the basic salt solution containing the carbonate group or the bicarbonate group in the mixture, or by mixing the porous inorganic oxide and/or the precursor thereof in the basic salt solution and then dropping the solution containing the nickel compound in the mixture. The latter method is more preferred.

As a silica source in the case of using silica as the porous inorganic oxide, at least one selected from a silica powder, a silica sol, and a silica gel is preferably used. The average particle diameter of these particles is preferably 1-100 nm and is more preferably 1-25 nm.

An alumina source in the case of using alumina as the porous inorganic oxide includes hydrated alumina such as an alumina powder, pseudo-boehmite, boehmite alumina, bayerite, gibbsite, etc.

In the case of using silica modified with aluminum as the porous inorganic oxide, the above-stated compound is used as a silica source, and, in addition to the compounds used as the alumina source, aluminum chloride, aluminum nitrate, aluminum sulfate, aluminum acetate, aluminum hydroxide, etc., are used as an aluminum source.

Nickel chloride, nickel nitrate, nickel sulfate, nickel acetate, etc., are preferred as a nickel compound used as a raw material in a method of manufacturing the desulfurizing agent precursor according to the second embodiment.

As the basic salt that contains the carbonate group or the bicarbonate group and that is used as a precipitant, sodium carbonate, potassium carbonate, lithium carbonate, ammonium bicarbonate, sodium hydrogen carbonate, potassium hydrogen carbonate, lithium hydrogen carbonate, ammonium hydrogen carbonate, etc., are preferably used. A nickel compound containing the carbonate group is generated in precipitate generated by using these salts as precipitants, i.e., in the desulfurizing agent precursor according to the second embodiment.

From the perspective of ensuring that the nickel compound precipitate is generated, the amount of the basic salt is desired to be 1.0 to 1.5 times, preferably 1.1 to 1.4 times, the equivalent of the nickel compound that is used. The pH of the mixture of the solution containing the generated nickel compound and the solution containing the basic salt is preferably set to be about 7 to 9.

The temperature of the solution when forming precipitate by mixing the solution containing the nickel compound and the solution containing the basic salt is desired to be 50 to 100 degrees Celsius and is preferably 70 to 90 degrees Celsius.

In a method of manufacturing the desulfurizing agent precursor according to the second embodiment, carbon dioxide is brought to coexist in a solution obtained by mixing a solution containing a nickel compound and a basic salt solution containing a carbonate group or a bicarbonate group in the precipitation process of obtaining precipitate containing the nickel compound and the porous inorganic oxide. A method for allowing carbon dioxide to coexist in the solution is not particularly limited as long as carbon dioxide can be dissolved in a mother solution in which the precipitate is produced by means of the nickel compound, the basic salt, and the porous inorganic oxide. A method for dissolving carbon dioxide in the mother solution by supplying carbon dioxide gas in a space above the mother solution in a container, a method for aeration (bubbling) with carbon dioxide gas in the mother solution, or the like is employed. From the perspective of increasing the concentration of the carbon dioxide dissolved in the mother solution, the aeration method is preferred. More specifically, for example, a method for bubbling carbon dioxide gas in the solution containing the basic salt and the porous inorganic oxide and dropping the solution containing the nickel compound while stirring is employed. In this case, it is preferred to continue the heating and the bubbling of the carbon dioxide for, e.g., 0.5 to 10 hours, preferably 1 to 5 hours, after the dropping of the solution containing the nickel compound is finished so as to complete the generation of the precipitate.

Preferably, the solution containing the nickel compound further contains a zinc compound in the method of manufacturing of the desulfurizing agent precursor according to the second embodiment, and the method comprises a precipitation process of obtaining precipitate that contains the nickel compound, the porous inorganic oxide, and the zinc compound. As a zinc compound used in this case, zinc chloride, zinc nitrate, zinc sulfate, zinc acetate, zinc hydroxide, etc., are preferred.

After forming the nickel compound precipitate on the porous inorganic oxide, a generated solid product is filtered and then washed by an ion-exchanged water or the like. When the washing is not sufficient, chlorine, a nitric radical, a sulfate radical, an acetic acid radical, a sodium ion, a potassium ion, etc., are left on a catalyst, adversely affecting the performance of the desulfurizing catalyst. Thus, thorough washing is carried out. When washing cannot be carried out sufficiently with an ion-exchanged water, an aqueous solution of a base such as ammonia, sodium carbonate, sodium hydrogen carbonate, potassium carbonate, etc., may be used as a wash solution. In this case, it is preferred to wash the solid product first with the aqueous solution of a base and then with an ion-exchanged water. Particularly, a residual sodium ion adversely affects the performance of the desulfurizing agent. Thus, it is desired to carry out washing until the amount of remaining sodium becomes at most 0.1 percent by mass, preferably, at most 0.05 percent by mass.

The solid product after the washing is pulverized and then dried. A drying method is not particularly limited and can include, for example, drying by heating in air, degassed drying under reduced pressure, a spray drying method, etc. When drying by heating is carried out in an air atmosphere, it is preferred to carry out the drying for 5 to 15 hours at a temperature of 100 to 150 degrees Celsius.

The above-stated desulfurizing agent precursor according to the second embodiment obtained in the above-described manner may be directly provided for desulfurizing a hydrocarbon or may serve as the desulfurizing agent according to the second embodiment after a reduction process. From a perspective of improving the desulfurizing performance and durability of the desulfurizing agent, it is preferred to perform the calcination treatment before the reduction treatment so as to obtain a calcined desulfurizing agent precursor (hereinafter, sometimes referred to as a "calcined precursor") and then to perform the reduction treatment so as to obtain the desulfurizing agent according to the second embodiment. In the subject application, the calcined desulfurizing agent precursor is the desulfurizing agent precursor according to the second embodiment treated with the calcination treatment. A method of manufacturing the calcined precursor is not particularly limited; however, it is preferred to employ the following manufacturing method of the calcined precursor according to the second embodiment.

In the manufacturing method of the calcined precursor according to the second embodiment, the desulfurizing agent precursor according to the second embodiment is calcined in an atmosphere containing molecular oxygen, preferably in an air atmosphere, at 160-300 degrees Celsius, preferably at 200-300 degrees Celsius, and more preferably at 250-290 degrees Celsius. When the calcination temperature is below 160 degrees Celsius, the effects obtained by the calcination tend not to be sufficient. On the other hand, when the calcination temperature is above 300 degrees Celsius, the desulfurizing performance and durability of the desulfurizing agent obtained by performing the reduction treatment on the obtained calcined precursor tend to be lowered. Although the calcination time varies depending on the calcination temperature, it is desired that the calcination time be generally 0.1 to 10 hours, preferably 1 to 5 hours. When washing after the precipitation is not sufficient in manufacturing the above-stated desulfurizing agent precursor according to the second embodiment, washing may be carried out after the calcination process. An ion-exchanged water or the above-stated aqueous solution of a base can also be used in this case.

The desulfurizing agent precursor according to the second embodiment or the calcined precursor obtained by the manufacturing method of the calcined precursor according to the second embodiment can be directly provided for desulfurizing a hydrocarbon; however, it is preferred to perform the reduction treatment by the manufacturing method of the desulfurizing agent according to the second embodiment so as to obtain the desulfurizing agent according to the second embodiment from a perspective of improving the desulfurizing performance and durability of the desulfurizing agent. The reduction treatment is desirably performed at 150-300 degrees Celsius, preferably at 200-300 degrees Celsius, and more preferably at 250-290 degrees Celsius under hydrogen flow. Although the reduction treatment time varies depending on the reduction treatment temperature, it is desired that the reduction treatment time be generally 0.1 to 15 hours, preferably 2 to 10 hours.

When manufacturing a desulfurizing agent for a hydrocarbon for a fuel cell system by using the manufacturing method of the desulfurizing agent according to the second embodiment, it is preferred to fill a desulfurization reactor for a fuel cell system with the desulfurizing agent precursor according to the second embodiment or the calcined precursor according to the second embodiment and then to perform the reduction treatment on the desulfurizing agent precursor or the calcined precursor. A conventional reduction treatment for a desulfurizing agent precursor or a calcined precursor is typically performed at about 350-450 degrees Celsius in a hydrogen atmosphere. Therefore, it is often difficult to perform the reduction treatment at a location of manufacture of the fuel cell system due to an equipment-related problem. The operating temperature of a desulfurization reaction apparatus that constitutes the fuel cell system is typically 100-260 degrees Celsius. Due to the design thereof, it is often difficult to fill a reactor of the reaction apparatus with the desulfurizing agent and perform the reduction treatment at the above-stated temperature with use of the apparatus. Therefore, the reduction treatment is generally preformed on desulfurizing agent precursors or calcined precursors in a bulk state (a state where individual desulfurization reactors for fuel cell systems are not filled with desulfurizing agent precursors or calcined precursors) at catalyst makers or the like having equipment that allows for the reduction treatment at high temperature. Activated desulfurizing agents in a bulk state are transferred to the location of manufacture of a fuel cell system. Since activated desulfurizing agents have a problem of becoming deactivated when exposed to the air and a safety-related problem, a so-called stabilization treatment of slightly oxidizing only the surface layer thereof is generally performed after the reduction treatment, and the activated desulfurizing agents are then shipped. At the location of manufacture of the fuel cell system, individual desulfurization reactors for fuel cell systems are filled with the activated desulfurizing agents, and the reduction treatment is performed at relatively low temperature to remove the stabilization-treated layer for reactivation.

The desulfurizing agent precursor according to the second embodiment and the calcined precursor obtained from this desulfurizing agent precursor can yield a desulfurizing agent that has high desulfurizing performance and durability by performing the reduction treatment at a relatively low temperature of at most 300 degrees Celsius, compared to a desulfurizing agent precursor and a calcined precursor according to the conventional technology. Therefore, these precursors are transferred to the location of manufacture of the fuel cell system without the reduction treatment or the stabilization treatment at the location of manufacture of the precursors, and individual desulfurization reactors for fuel cell systems are then filled with the precursors, allowing the precursors to be activated by the reduction process. With this, two processes, the reduction treatment and stabilization treatment at high temperature in a bulk state, are no longer necessary, and the manufacturing costs of the desulfurizing agent can be reduced accordingly.

The shape of the desulfurizing agent precursor according to the second embodiment is not particularly limited, and the precursor may be a powder as obtained or may be molded into a molded product. From a perspective of reducing a pressure loss of a hydrocarbon in a reactor in desulfurizing the hydrocarbon or preventing channeling, the desulfurizing agent is preferably a molded product, and the precursor thereof is also preferably a molded product. As a molding method, tablet compression may be used, and an obtained molded product may be sized in a proper range after pulverization. Furthermore, extrusion molding may be used. A proper binder may be blended for molding. The binder is not particularly limited; however, alumina, silica, titania, zirconia, carbon black, mixture thereof, or the like is used. The amount of the binder to be blended is normally at most 30 percent by mass, preferably at most 10 percent by mass with respect to the total mass including the mass of the desulfurizing agent precursor. Also, a molding auxiliary made of organic materials may be also used for molding. The calcination and/or reduction treatment are performed on the desulfurizing agent precursor according to the second embodiment molded into a molded product, and the desulfurizing agent precursor becomes the desulfurizing agent according to the second embodiment as a molded product. The calcined precursor according to the second embodiment may be molded into a molded product, and the desulfurizing agent according to the second embodiment as a molded product may be obtained by performing the reduction treatment on the molded calcined precursor.

A hydrocarbon to be desulfurized by using the desulfurizing agent according to the second embodiment include natural gas, LPG, naphtha, kerosene, etc. However, kerosene is the most preferable. A case in which kerosene is used is now described in detail in the following.

Kerosene used as a raw material in the hydrocarbon desulfurization method according to the second embodiment contains sulfur and may be the one used as commonly-used fuel. It is desired that the concentration of the sulfur content in the kerosene be 0.1 to 30 mass ppm, preferably 1 to 25 mass ppm, and more preferably 5 to 20 mass ppm. From a performance perspective, the amount of the sulfur content contained in the kerosene is preferred to be small. However, carrying out desulfurization to reduce the sulfur content to be less than 0.1 mass ppm in a conventinal petroleum refinery process requires a large equipment cost and operation cost and is thus not preferable. On the other hand, when the sulfur content exceeds 30 percent by mass, the desulfurizing agent according to the second embodiment used in the desulfurization method according to the second embodiment fails to maintain the desulfurizing performance in a short period of time, and this is thus not preferable. The sulfur content in the second embodiment is a generic term used to refer to various types of sulfur, inorganic sulfur compounds, and organic sulfur compounds that are normally contained in a hydrocarbon. The concentration thereof is indicated in kerosene mass standard in terms of sulfur atoms, and a value quantified by a gas chromatograph sulfur chemiluminescence detector (GC-SCD) is used.

When kerosene is used as a raw material in the hydrocarbon desulfurization method according to the second embodiment, the kerosene may be exposed to the desulfurizing agent according to the second embodiment in any of phases: a liquid phase; a gas phase; and a gas-liquid mixed phase. However, a liquid phase is preferably employed from perspectives of preventing deterioration of the desulfurizing performance over time due to the deposition of carbonaceous materials on the desulfurizing agent and of maintaining the desulfurizing performance for a long period of time.

The operating pressure in the method of desulfurizing kerosene according to the second embodiment is preferably low being in a range of normal pressure to 0.9 Mpa, particularly normal pressure to 0.7 Mpa, in consideration of the economic efficiency, safety, etc., of a fuel cell system. The reaction temperature is not particularly limited as long as the concentration of sulfur content can be lowered at the temperature. However, in consideration of the startup of an apparatus, it is preferable that the apparatus operate effectively even at low temperature, and in consideration of the steady state, the temperature is preferred to be 0 to 400 degrees Celsius. More preferably, a temperature of 0 to 300 degrees Celsius, particularly 100 to 260 degrees Celsius, is employed. Selecting such a condition allows kerosene to be kept in a liquid state. When LHSV is too high, desulfurization efficiency is lowered. When LHSV is too low, the apparatus becomes too large. Therefore, LHSV is set to be in a proper range. For LSHV, a range of 0.01 to 15 h⁻¹ is preferred, a range of 0.05 to 5 h⁻¹ is more preferred, and a range of 0.1 to 3 h⁻¹ is particularly preferred. The desulfurization method according to the second embodiment is **characterized in that** the sulfur content in kerosene can be sufficiently desulfurized even in the absence of hydrogen. However, a small amount of hydrogen may be introduced. The flow rate at that time is, for example, 0.05 to 1.0 NL per 1 g of kerosene.

The form of a desulfurizing apparatus used for the hydrocarbon desulfurization method according to the second embodiment is not particularly limited; however, for example, a flow-type fixed-bed system can be used. The shape of the desulfurizing apparatus can be any publicly-known shapes, such as a cylindrical shape, a tabular shape, etc., according to a purpose of each process.

When kerosene is used as a raw material in the hydrocarbon desulfurization method according to the second embodiment, the concentration of sulfur content contained in the kerosene can be lowered to be at most 20 mass ppb in the absence of hydrogen.

A case in which kerosene is used as a raw fuel in a fuel cell system that uses the hydrocarbon according to the second embodiment is now described in detail in the following.

Kerosene with a sulfur content concentration preferably desulfurized to be about 20 mass ppb at most is then served for a reforming reaction process, and gas that is rich in hydrogen is produced. The reforming reaction process is not particularly limited. However, autothermal reforming or the like can be used that carries out a steam reforming reaction where a raw fuel is reformed by a high temperature treatment with water vapor over a catalyst along with water vapor, a partial oxidation reaction with use of oxygen-containing gas, or a autothermal reforming reaction in a system where water vapor and oxygen-containing gas coexist. A commonly-used catalyst to be used is the one containing ruthenium. A reaction condition of the reforming reaction process is not limited; however, a reaction temperature is preferably 200 to 1000 degrees Celsius, and 500 to 850 degrees Celsius is particularly preferred. Reaction pressure is preferably normal pressure to 1 Mpa, and normal pressure to 0.2 Mpa is particularly preferred. The LSHV is preferably 0.01 to 40 h⁻¹, and 0.1 to 10 h⁻¹ is particularly preferred.

Mixed gas containing carbon monoxide and hydrogen that is obtained through the reforming reaction process can be directly used as fuel for fuel cells in the case of a solid oxide fuel cell or the like. For a fuel cell such as a phosphoric acid fuel cell and a polymer electrolyte fuel cell that requires removal of impurities, particularly carbon monoxide, included in fuel gas, the mixed gas is served for a shift reaction process in order to reduce carbon monoxide content.

The shift reaction process is a process of causing carbon monoxide and water to react so as to convert the carbon monoxide and water into hydrogen and carbon dioxide. The shift reaction process reduces the carbon monoxide content in the mixed gas to be 2 volume percent or less, preferably 1 volume percent or less, and more preferably 0.5 volume percent or less with use of a catalyst containing, e.g., iron-chrome mixed oxide, copper-zinc mixed oxide, platinum, ruthenium, iridium, etc. A condition of the shift reaction is not necessarily limited by, e.g., the composition of reformed gas to be used as a raw fuel; however, the reaction temperature is preferably 120 to 500 degrees Celsius, and 150 to 450 degrees Celsius is particularly preferred. The pressure is preferably normal pressure to 1 Mpa, and normal pressure to 0.2 Mpa is particularly preferred. GSHV is preferably 100 to 50000 h⁻¹, and 300 to 10000 h⁻¹ is particularly preferred. In the shift reaction process, two reactors, a high-temperature shift reactor and a low-temperature shift reactor, may be provided in series. An iron-chrome based catalyst and a copper-zinc based catalyst or the like are preferably used for the high-temperature shift reactor and the low-temperature shift reactor, respectively. Normally, the mixed gas in this state can be used as fuel in the phosphoric acid fuel cell.

It is necessary to further reduce the carbon monoxide concentration in the polymer electrolyte fuel cell. Thus, it is desired to provide a process of further removing carbon monoxide. The process is not particularly limited, and various methods such as an adsorption separation method, a hydrogen separation membrane method, a carbon monoxide preferential oxidation process can be used. However, it is particularly preferred to employ a process that uses a carbon monoxide preferential oxidation reaction from the aspects of miniaturization and economic efficiency of the apparatus. In this process, oxygen in an amount of 0.5 to 10 fold moles, preferably 0.7 to 5 fold moles, and more preferably 1 to 3 fold moles relative to the number of moles of the remaining carbon monoxide is added while using a catalyst containing iron, cobalt, nickel, ruthenium, rhodium, palladium, osmium, iridium, platinum, zinc, silver, gold, or the like, so that the carbon monoxide is preferentially converted to carbon dioxide. With this, the concentration of the carbon monoxide is reduced. A reaction condition of the method is not limited; however, reaction temperature is preferably 80 to 350 degrees Celsius, and 100 to 300 degrees Celsius is particularly preferred. The pressure is preferably normal pressure to 1 Mpa, and normal pressure to 0.2 Mpa is particularly preferred. The GSHV is preferably 1000 to 50000 h⁻¹, and 3000 to 30000 h⁻¹ is particularly preferred. In this case, causing the carbon monoxide to react with coexisting hydrogen concurrently with the oxidation of the carbon monoxide so as to produce methane allows the carbon monoxide concentration to be reduced.

The fuel cell system in which the desulfurizing agent according to the second embodiment is similar to the fuel cell system explained in the first embodiment.

### [EXEMPLARY EMBODIMENTS]

Exemplary embodiments are listed in the following, and a detailed description is given of the present invention. However, the present invention is not limited to these.

### (Exemplary Embodiment 1-1)

### <Manufacturing of Desulfurizing Agent Precursor>

In an ion-exchanged water, 43.7 g of nickel nitrate hexahydrate (commercially available agent special grade) and 5.30 g of zinc nitrate hexahydrate (commercially available agent special grade) were dissolved to prepare 150 ml of an aqueous solution. The aqueous solution is referred to as liquid A. To an ion-exchanged water, 24.0 g of sodium carbonate (commercially available agent special grade) was dissolved and mixed with 20.6 g of commercially available silica sol (the particle diameter is about 7 nm, and the silica content is 3.30 g) to prepare 300 ml of a solution. The solution is referred to as liquid B. Liquid B was stirred at a temperature maintained to be 80 degrees Celsius, and liquid A was dropped in liquid B to form precipitate. After the dropping was finished, the heating and the stirring were continued for two hours so as to complete the generation of the precipitate. Then, the precipitate was washed with an ion-exchanged water after the precipitate was collected by filtration, and the resulting cake was crushed and then dried in air at a temperature of 120 degrees Celsius for 10 hours so as to obtain a desulfurizing agent precursor in a powder form. A portion of the desulfurizing agent precursor was sampled, and carbon atoms that were contained were quantified by a high frequency heat-generating type carbon and sulfur analyzer so as to calculate C/Ni.

### <Manufacturing of Calcined Precursor>

The desulfurizing agent precursor obtained in the above was calcined at a temperature of 230 degrees Celsius in air, and 15 g of a calcined precursor in a powder form was obtained. The calcined precursor had a composition where Ni(in terms of NiO)/ZnO/Si02=65 percent by mass/10 percent by mass/25 percent by mass, and the remaining Na amount was 0.05 percent by mass or less. As in the case of the desulfurizing agent precursor, carbon atoms that were contained were quantified so as to calculate C/Ni.

### <Manufacturing of Desulfurizing Agent>

The calcined precursor obtained in the above was tablet-compressed and then further crushed roughly. The particle diameters were prepared to be 1.18-2.0 mm. A flow type reaction pipe with a diameter of 1.27 cm was filled with 1 g of the crushed calcined precursor, and the crushed calcined precursor was reduced in stream of hydrogen at a temperature of 280 degrees Celsius for 7 hours so as to obtain a desulfurizing agent. The degree of reduction of the nickel atoms in the desulfurizing agent and the amount of hydrogen adsorption of the desulfurizing agent were measured after sampling a small amount of the calcined precursor and performing a pretreatment under a reduction treatment condition that was same as the above-stated condition.

### <Desulfurization Test>

The desulfurizing agent obtained in the above was transferred to a stainless steel autoclave reactor under a nitrogen atmosphere. Then, a desulfurization test was conducted under a nitrogen atmosphere of normal pressure at a reaction temperature of 200 degrees Celsius with use of a solution, as a model raw material of kerosene. The solution was obtained by adding benzothiophene as a sulfur compound to n-dodecane, which was a reagent, such that the amount of the benzothiophene was 200 mass ppm based on the mass of the n-dodecane in terms of sulfur atoms. After having carried out the reaction for two hours, the reactor was cooled down, and the concentration of remaining sulfur content in the model raw material was quantified by a GC-SCD method so as to calculate the sulfur adsorption amount per unit desulfurizing agent mass. The calculated sulfur adsorption amount was used as a performance measure. Experience shows that a desulfurizing agent showing a large adsorption amount of sulfur content in this test will also show high desulfurizing activity and excellent durability in a long-term desulfurization test of real kerosene by means of a continuous-flow method. Table 1 shows the composition of desulfurizing agent precursors (desulfurizing agents), C/Ni, calcination temperatures, C/Ni of calcined precursors, conditions of a reduction treatment by hydrogen, the reduction degree of nickel atoms in the desulfurizing agents, and the sulfur adsorption amount obtained two hours after the desulfurization reaction.

Table 1

**TABLE 1**

| EXEMPLARY EMBODIMENT | | 1-1 | 1-2 | 1-3 | 1-4 | 1-5 | 1-6 | 1-7 | 1-8 | 1-9 |
|---|---|---|---|---|---|---|---|---|---|---|
| PRECURSOR | NiO(% BY MASS) | 62 | 65 | 65 | 65 | 67 | 45 | 48 | 62 | 50 |
| | ZnO(% BY MASS) | 10 | 10 | 10 | 10 | 12 | 30 | 40 | 10 | 23 |
| | SiO₂(% BY MASS) | 28 | 25 | 25 | 25 | 21 | 25 | 12 | 0 | 22 |
| | Al₂O₃(% BY MASS) | 0 | 0 | 0 | 0 | 0 | 0 | 0 | 28 | 1.6 |
| | C/Ni(mol/mol) | 0.071 | 0.074 | 0.074 | 0.074 | 0.086 | 0.065 | 0.063 | 0.092 | 0.087 |
| CALCINED PRECURSOR | CALCINATION TEMPERATURE (°C) | 230 | 230 | 300 | NO CALCINATION | 300 | 300 | 300 | 230 | 250 |
| | C/Ni(mol/mol) | 0.067 | 0.070 | 0.040 | - | 0.041 | 0.029 | 0.039 | 0.073 | 0.068 |
| DESULFURIZING AGENT | REDUCTION CONDITION | 280°C×7h | 220°C×24h | 280°C×7h | 280°C×7h | 280°C×7h | 280°C×7h | 280°C ×7h | 280°C×7h | 300°C×7h |
| | REDUCTION DEGREE OF Ni(%) | 54 | 70 | 55 | 56 | 50 | 72 | 72 | 51 | 56 |
| | HYDROGEN ADSORPTION AMOUNT(ml/g) | 4.3 | 4.0 | 4.0 | 3.5 | 4.1 | 3.7 | 3.8 | 4.5 | 4.1 |
| | SULFUR ADSORPTION AMOUNT (% BY MASS) | 2.1 | 2.0 | 2.0 | 1.9 | 2.3 | 1.9 | 2.0 | 2.3 | 2.2 |

### (Exemplary Embodiment 1-2 through Exemplary Embodiment 1-9)

In manufacturing each of desulfurizing agent precursors, the desulfurizing agent precursor having composition described in Table 1 was manufactured by an operation that was similar to that shown in exemplary embodiment 1-1 except that the prepared amount of the raw material used in exemplary embodiment 1-1 was adjusted. Instead of silica that was used in exemplary embodiment 1-1, alumina was used in exemplary embodiment 1-8, and silica-alumina was used in exemplary embodiment 1-9, as a porous inorganic oxide.

Calcined precursors were obtained by performing a calcination treatment on the respective desulfurizing agent precursors that were obtained under calcinations conditions described in Table 1. No calcination treatment was performed in exemplary embodiment 1-4.

Furthermore, desulfurizing agents were manufactured by performing a reduction treatment on the respective calcined precursors or, in the case of exemplary embodiment 1-4, desulfurizing agent precursors under conditions described in Table 1.

A desulfurization test with use of the model raw material of kerosene was performed by an operation that was similar to that shown in exemplary embodiment 1-1 except that the desulfurizing agents that were respectively obtained were used. Table 1 shows the composition of the respective desulfurizing agent precursors (desulfurizing agents), C/Ni, calcination temperatures, C/Ni of calcined desulfurizing agent precursors, conditions of a reduction treatment by hydrogen, the reduction degree of nickel atoms in the desulfurizing agents, and the sulfur adsorption amount obtained two hours after the desulfurization reaction.

### (Comparative Example 1-1 through Comparative Example 1-7)

In order to achieve the composition of desulfurizing agent precursors described in Table 2, the composition of the respective prepared raw materials is adjusted, and the desulfurizing agent precursors were manufactured by an operation that was similar to that shown in exemplary embodiment 1-1.

Table 2

**TABLE 2**

| COMPARATIVE EXAMPLE | | 1-1 | 1-2 | 1-3 | 1-4 | 1-5 | 1-6 | 1-7 |
|---|---|---|---|---|---|---|---|---|
| PRECURSOR | NiO(% BY MASS) | 65 | 65 | 65 | 65 | 25 | 36 | 65 |
| | ZnO(% BY MASS) | 10 | 10 | 10 | 10 | 50 | 14 | 0 |
| | SiO₂(% BY MASS) | 25 | 25 | 25 | 25 | 25 | 50 | 35 |
| | Al₂O₃(% BY MASS) | 0 | 0 | 0 | 0 | 0 | 0 | 0 |
| | C/Ni(mol/mol) | 0.07 | 0.07 | 0.07 | 0.07 | 0.05 | 0.06 | 0.07 |
| CALCINED PRECURSOR | CALCINATION TEMPERATURE (°C) | 300 | 300 | 350 | 350 | 300 | 300 | 350 |
| | C/Ni(mol/mol) | 0.04 | 0.04 | 0.03 | 0.03 | 0.03 | 0.04 | 0.04 |
| DESULFURIZING AGENT | REDUCTION CONDITION | 360°C x7h | 360°Cx7h | 300°C×7h | 360°C ×7h | 280°C ×7h | 280°C ×7h | 360°C ×7h |
| | REDUCTION DEGREE OF Ni(%) | 93 | 93 | 73 | 95 | 88 | 82 | 95 |
| | HYDROGEN ADSORPTION AMOUNT(ml/g) | 3 | 3 | 2.3 | 2.9 | 2 | 2.2 | 1.1 |
| | SULFUR ADSORPTION AMOUNT (% BY MASS) | 1.4 | 1.4 | 0.9 | 1.2 | 0.4 | 0.7 | 0.4 |

The desulfurizing agent precursors obtained in the above were calcined under the respective conditions described in Table 1 and further reduced under respective conditions so as to manufacture respective desulfurizing agents.

The model raw material of kerosene was used by an operation that was similar to that shown in exemplary embodiment 1-1 except that the desulfurizing agents that were respectively obtained were used. Table 1 shows the composition of the respective desulfurizing agent precursors (desulfurizing agents), C/Ni, calcination temperatures, C/Ni of calcined desulfurizing agent precursors, conditions of a reduction treatment by hydrogen, the reduction degree of nickel atoms in the desulfurizing agents, and the sulfur adsorption amount obtained two hours after the desulfurization reaction.

Based on results shown in Table 1 and Table 2, it is clear that a desulfurizing agent obtained by performing, on a desulfurizing agent precursor having C/Ni in a specific range, the calcination treatment in a specific temperature range and then the reduction treatment in a specific temperature range has excellent desulfurizing performance.

In the fuel cell system shown in Fig. 1, the desulfurizer 5 was filled with the desulfurizing agent obtained in exemplary embodiment 1-1, and a power generation test was carried out using No.1 kerosene (sulfur content: 27 mass ppm) as fuel. During 200 hour operation, the desulfurizer worked normally, and no reduction in activity of the desulfurization agent was found. The desulfurization conditions were as follows: the temperature was 220 degrees Celsius, the pressure was 0.25 Mpa (gauge pressure), no hydrogen was circulated, and the LHSV was 0.5 h⁻¹. The operation was carried out as follows. The steam reformation was carried out under the conditions where S/C=3, the temperature was 700 degrees Celsius, and the LHSV was 1 h⁻¹ using a ruthenium catalyst at this time. The shift process (at the shift reactor 9) was carried out under the conditions where the temperature was 200 degrees Celsius, and the GHSV was 2000 h⁻¹ using a copper-zinc catalyst. The carbon monoxide preferential oxidation process (at the carbon monoxide preferential oxidation reactor 10) was carried out under the conditions where O₂/CO=3, the temperature was 150 degrees Celsius, and the GHSV was 5000 h⁻¹ using a ruthenium catalyst. The fuel cell worked normally, and the electric load 14 was smoothly operated.

### (Exemplary Embodiment 2-1)

### <Manufacturing of Desulfurizing Agent Precursor>

In an ion-exchanged water, 43.7 g of nickel nitrate hexahydrate (commercially available agent special grade) and 5.30 g of zinc nitrate hexahydrate (commercially available agent special grade) were dissolved to prepare 150 ml of an aqueous solution. The aqueous solution is referred to as liquid A. To an ion-exchanged water, 24.0 g of sodium carbonate (commercially available agent special grade) was dissolved and mixed with 20.6 g of commercially available silica sol (the particle diameter is about 7 nm, and the silica content is 3.30 g) to prepare 300 ml of a solution. The solution is referred to as liquid B. Liquid B was stirred at a temperature maintained to be 80 degrees Celsius while performing aeration with carbon dioxide gas, and liquid A was dropped in liquid B to form precipitate. After the dropping was finished, the heating and the aeration with carbon dioxide gas were continued for another two hours so as to complete the generation of the precipitate. The precipitate was washed with an ion-exchanged water after the precipitate was collected by filtration, and the resulting cake was crushed and then dried at a temperature of 120 degrees Celsius for 10 hours so as to obtain a desulfurizing agent precursor in a powder form. A portion of the desulfurizing agent precursor was sampled, and carbon atoms that were contained were quantified by a high frequency heat-generating type carbon and sulfur analyzer so as to calculate C/Ni.

### <Manufacturing of Calcined Desulfurizing Agent Precursor>

The desulfurizing agent precursor obtained in the above was calcined at a temperature of 230 degrees Celsius in air, and 15 g of a calcined desulfurizing agent precursor in a powder form was obtained. The calcined precursor had a composition where Ni(in terms of NiO)/ZnO/SiO₂=65 percent by mass/10 percent by mass/25 percent by mass, and the remaining Na amount was 0.05 percent by mass or less. As in the case of the desulfurizing agent precursor, carbon atoms that were contained were quantified so as to calculate C/Ni.

### <Manufacturing of Desulfurizing Agent>

The calcined desulfurizing agent precursor obtained in the above was tablet-compressed and then further crushed roughly. The particle diameters were prepared to be 1.18-2.0 mm. A flow type reaction pipe with a diameter of 1.27 cm was filled with 1 g of the crushed calcined precursor, and the crushed calcined precursor was reduced in stream of hydrogen at a temperature of 280 degrees Celsius for 7 hours so as to obtain a desulfurizing agent as a molded product. The degree of reduction of the nickel atoms in the desulfurizing agent and the amount of hydrogen adsorption were measured by the above-described method after sampling a small amount of the calcined desulfurizing agent precursor and performing a pretreatment under a reduction treatment condition that was same as the above-stated condition.

### <Desulfurization Test>

The desulfurizing agent obtained in the above was transferred to a stainless steel autoclave reactor under a nitrogen atmosphere. Then, a desulfurization test was conducted under a nitrogen atmosphere of normal pressure at a reaction temperature of 200 degrees Celsius with use of a solution, as a model raw material of kerosene. The solution was obtained by adding benzothiophene as a sulfur compound to n-dodecane, which was a reagent, such that the amount of the benzothiophene was 200 mass ppm based on the mass of the n-dodecane in terms of sulfur atoms. After having carried out the reaction for two hours, the reactor was cooled down, and the concentration of remaining sulfur content in the model raw material was quantified by a GC-SCD method so as to calculate the sulfur adsorption amount per unit desulfurizing agent mass. The calculated sulfur adsorption amount was used as a performance measure. Experience shows that a desulfurizing agent showing a large adsorption amount of sulfur content in this test will also show high desulfurizing activity and excellent durability in a long-term desulfurization test of real kerosene by means of a continuous-flow method. Table 3 shows the composition of desulfurizing agent precursors (desulfurizing agents), C/Ni, calcination temperatures, C/Ni of calcined desulfurizing agent precursors, conditions of a reduction treatment by hydrogen, the reduction degree of nickel atoms in the desulfurizing agents, and the sulfur adsorption amount obtained two hours after the reaction.

Table 3

**TABLE 3**

| EXEMPLARY EMBODIMENT | | 2-1 | 2-2 | 2-3 | 2-4 | 2-5 | 2-6 | 2-7 | 2-8 | 2-9 |
|---|---|---|---|---|---|---|---|---|---|---|
| PRECURSOR | NiO(% BY MASS) | 65 | 65 | 65 | 68 | 67 | 45 | 48 | 62 | 50 |
| | ZnO(% BY MASS) | 10 | 10 | 10 | 10 | 12 | 30 | 40 | 10 | 23 |
| | SiO₂(% BY MASS) | 25 | 25 | 25 | 22 | 21 | 25 | 12 | 0 | 22 |
| | Al₂O₃(% BY MASS) | 0 | 0 | 0 | 0 | 0 | 0 | 0 | 28 | 1.6 |
| | CO₂ AERATION | YES | YES | YES | YES | YES | YES | YES | YES | YES |
| | C/Ni(mol/mol) | 0.119 | 0.119 | 0.119 | 0.125 | 0.123 | 0.105 | 0.103 | 0.139 | 0.132 |
| CALCINED PRECUR-SOR | CALCINATION TEMPERATURE (°C) | 230 | 230 | 300 | NO CALCINATION | 300 | 300 | 300 | 230 | 250 |
| | C/Ni(mol/mol) | 0.082 | 0.082 | 0.051 | - | 0.054 | 0.051 | 0.052 | 0.087 | 0.085 |
| DESULFURIZING AGENT | REDUCTION CONDITION | 280°C×7h | 220°C×24h | 280°C×7h | 280°C×7h | 280°C ×7h | 280°C ×7h | 280°C ×7h | 280°C ×7h | 300°C×7h |
| | REDUCTION DEGREE OF Ni(%) DEGREE OF Ni(%) | 62 | 75 | 64 | 68 | 63 | 78 | 78 | 65 | 68 |
| | HYDROGEN ADSORPTION AMOUNT(ml/g) | 6.2 | 5.0 | 5.1 | 5.1 | 6.2 | 5.4 | 5.3 | 6.4 | 5.7 |
| | SULFUR ADSORPTION AMOUNT (% BY MASS) | 3.0 | 2.6 | 2.5 | 2.5 | 3.0 | 2.6 | 2.6 | 3.1 | 2.8 |

### (Exemplary Embodiment 2-2 through Exemplary Embodiment 2-9)

In manufacturing each desulfurizing agent precursor, the desulfurizing agent precursor having composition described in Table 3 was manufactured by an operation that was similar to that shown in exemplary embodiment 2-1 except that the prepared amount of the raw material used in exemplary embodiment 2-1 was adjusted. Instead of silica that was used in exemplary embodiment 2-1, alumina was used in exemplary embodiment 2-8, and silica-alumina was used in exemplary embodiment 2-9, as a porous inorganic oxide.

Calcined desulfurizing agent precursors were obtained by performing a calcination treatment on the respective desulfurizing agent precursors that were obtained under calcinations conditions described in Table 3. No calcination treatment was performed in exemplary embodiment 2-4.

Furthermore, desulfurizing agents were manufactured by performing a reduction treatment on the respective calcined desulfurizing agent precursors or, in the case of exemplary embodiment 2-4, desulfurizing agent precursors under conditions described in Table 1.

A desulfurization test with use of the model raw material of kerosene was conducted by an operation that was similar to that shown in exemplary embodiment 2-1 except that the desulfurizing agents that were respectively obtained were used. Table 3 shows the composition of the respective desulfurizing agent precursors (desulfurizing agents), C/Ni, C/Ni of calcined desulfurizing agent precursors, conditions of a reduction treatment by hydrogen, the reduction degree of nickel atoms in the desulfurizing agents, and the sulfur adsorption amount obtained two hours after the reaction.

Based on results shown in Fig. 3, bringing carbon dioxide to coexist during the manufacturing process of a desulfurizing agent precursor increases C/Ni in the desulfurizing agent precursor to a large extent. Through a reduction at a low temperature, a desulfurizing agent obtained by performing a reduction treatment on the desulfurizing agent precursor can obtain relatively high degree of reduction of nickel atoms and a large amount of hydrogen adsorption. The desulfurizing agent thus has excellent desulfurizing performance (exemplary embodiment 2-4). It is found that, although C/Ni is reduced by performing the calcination treatment on the obtained desulfurizing agent precursor, the desulfurizing agent that can be obtained by further performing a reduction treatment on the desulfurizing agent precursor has high reduction degree of nickel atoms, a large amount of hydrogen adsorption, and excellent desulfurizing performance (exemplary embodiment 2-1 through exemplary embodiment 2-3 and exemplary embodiment 2-5 through exemplary embodiment 2-9).

In the fuel cell system shown in Fig. 1, the desulfurizer 5 was filled with the desulfurizing agent obtained in exemplary embodiment 2-1, and a power generation test was carried out using No.1 kerosene (sulfur content: 27 mass ppm) as fuel. During 200 hour operation, the desulfurizer worked normally, and no reduction in activity of the desulfurization agent was found. The desulfurization conditions were as follows: the temperature was 220 degrees Celsius, the pressure was 0.25 Mpa (gauge pressure), no hydrogen was circulated, and the LHSV was 0.5 h⁻¹. The operation was carried out as follows. The steam reformation was carried out under the conditions where S/C=3, the temperature was 700 degrees Celsius, and the LHSV was 1 h⁻¹ using a ruthenium catalyst at this time. The shift process (at the shift reactor 9) was carried out under the conditions where the temperature was 200 degrees Celsius, and the GHSV was 2000 h⁻¹ using a copper-zinc catalyst. The carbon monoxide preferential oxidation process (at the carbon monoxide preferential oxidation reactor 10) was carried out under the conditions where O₂/CO=3 the temperature was 150 degrees Celsius, and the GHSV was 5000 h⁻¹ using a ruthenium catalyst. The fuel cell worked normally, and the electric load 14 was smoothly operated.

### [DESCRIPTION OF THE REFERENCE NUMERALS]

- 1: water tank
- 2: water pump
- 3: fuel tank
- 4: fuel pump
- 5: desulfurizer
- 6: vaporizer
- 7: reformer
- 8: air blower
- 9: shift reactor
- 10: carbon monoxide preferential oxidation reactor
- 11: anode
- 12: cathode
- 13: polymer electrolyte
- 14: electric load
- 15: exhaust
- 16: fuel cell stack
- 17: warming burner

### [INDUSTRIAL APPLICABILITY]

The present invention can be applied to a technique for desulfurizing a hydrocarbon that contain sulfur compounds with use of an desulfurizing agent.

## Claims

1. A desulfurizing agent for a hydrocarbon comprising:
10 to 30 percent by mass of a porous inorganic oxide based on the total mass of the desulfurizing agent;
3 to 40 percent by mass of zinc oxide; and
45 to 75 percent by mass of a nickel atom in terms of nickel oxide, wherein
the reduction degree of the nickel atom is 50 to 80 percent, and the amount of hydrogen adsorption per unit desulfurizing agent mass is 3.5 to 4.6 ml/g.

2. The desulfurizing agent for a hydrocarbon according to claim 1, wherein the porous inorganic oxide is silica or alumina.

3. The desulfurizing agent for a hydrocarbon according to claim 2, wherein the silica is modified with aluminum.

4. A manufacturing method of a desulfurizing agent for a hydrocarbon comprising:
performing a reduction treatment at a temperature of 200-300 degrees Celsius on a desulfurizing agent precursor for a hydrocarbon containing:
10 to 30 percent by mass of a porous inorganic oxide based on the total mass of the desulfurizing agent precursor;
3 to 40 percent by mass of zinc oxide;
45 to 75 percent by mass of a nickel atom in terms of nickel oxide; and
a carbon atom, wherein
a mole ratio of the carbon atom to the nickel atom is 0.065 to 0.094.

5. A manufacturing method of a desulfurizing agent for a hydrocarbon comprising:
manufacturing a calcined precursor by performing a calcination treatment at a temperature of 160-300 degrees Celsius on a desulfurizing agent precursor for a hydrocarbon containing:
10 to 30 percent by mass of a porous inorganic oxide based on the total mass of the desulfurizing agent precursor;
3 to 40 percent by mass of zinc oxide;
45 to 75 percent by mass of a nickel atom in terms of nickel oxide; and
a carbon atom, wherein
a mole ratio of the carbon atom to the nickel atom is 0.065 to 0.094; and performing a reduction treatment on the calcined precursor at a temperature of 200-300 degrees Celsius.

6. The manufacturing method of a desulfurizing agent for a hydrocarbon according to claim 4 or 5, wherein the porous inorganic oxide is silica or alumina.

7. The manufacturing method of a desulfurizing agent for a hydrocarbon according to claim 6, wherein the silica is modified with aluminum.

8. A manufacturing method of a desulfurizing agent for a hydrocarbon that is used for a fuel cell system by use of the method according to any one of claim 4 through claim 7, wherein a desulfurization reactor for a fuel cell system is filled with the desulfurizing agent precursor for a hydrocarbon or the calcined precursor in performing the reduction treatment.

9. A hydrocarbon desulfurization method for exposing the desulfurizing agent for a hydrocarbon according to any one of claim 1 through claim 3 to a hydrocarbon containing a sulfur compound.

10. The hydrocarbon desulfurization method according to claim 9, wherein the hydrocarbon is kerosene.

11. A fuel cell system that uses a hydrocarbon as a raw fuel comprising a hydrocarbon desulfurizing apparatus having a reactor filled with the desulfurizing agent for a hydrocarbon according to any one of claim 1 through claim 3.

12. A desulfurizing agent precursor for a hydrocarbon comprising:
10 to 30 percent by mass of a porous inorganic oxide based on the total mass of the desulfurizing agent precursor;
45 to 75 percent by mass of a nickel atom in terms of nickel oxide; and
a carbon atom, wherein
a mole ratio of the carbon atom to the nickel atom is 0.095 to 0.20.

13. The desulfurizing agent precursor for a hydrocarbon according to claim 12, wherein the porous inorganic oxide is silica or alumina.

14. The desulfurizing agent precursor for a hydrocarbon according to claim 13, wherein the silica is modified with aluminum.

15. The desulfurizing agent precursor for a hydrocarbon according to any one of claim 12 through claim 14 further comprising 3 to 40 percent by mass of zinc oxide based on the total mass of the desulfurizing agent precursor.

16. A calcined desulfurizing agent precursor for a hydrocarbon obtained by performing a calcination treatment on the desulfurizing agent precursor for a hydrocarbon according to any one of claim 12 through claim 15 at a temperature of 160-300 degrees Celsius.

17. A desulfurizing agent for a hydrocarbon comprising:
10 to 30 percent by mass of a porous inorganic oxide based on the total mass of the desulfurizing agent;
3 to 40 percent by mass of zinc oxide; and
45 to 75 percent by mass of a nickel atom in terms of nickel oxide, wherein
the reduction degree of the nickel atom is 50 to 80 percent, and the amount of hydrogen adsorption per unit desulfurizing agent mass is 4.7 to 7.0 ml/g.

18. The desulfurizing agent for a hydrocarbon according to claim 17, wherein the porous inorganic oxide is silica or alumina.

19. The desulfurizing agent for a hydrocarbon according to claim 17, wherein the silica is modified with aluminum.

20. A manufacturing method of the desulfurizing agent precursor for a hydrocarbon according to any one of claim 12 through claim 15 comprising:
precipitating where precipitate containing a nickel compound and a porous inorganic oxide is obtained by preparing a mixed solution by mixing an aqueous solution containing the nickel compound or both the nickel compound and the porous inorganic oxide and/or a precursor thereof and an aqueous solution containing a basic salt, which contains a carbonate group or a bicarbonate group, or both the basic salt and the porous inorganic oxide and/or a precursor thereof; and
bringing carbon dioxide to coexist in the mixed solution in the precipitating.

21. The manufacturing method of the desulfurizing agent precursor for a hydrocarbon according to claim 20, wherein
a zinc compound is added to the mixed solution in the precipitating, and precipitate containing the nickel compound, the porous inorganic oxide, and the zinc compound is produced.

22. A manufacturing method of a calcined desulfurizing agent precursor for a hydrocarbon comprising calcining the desulfurizing agent precursor for a hydrocarbon according to any one of claim 12 through claim 15 at a temperature of 160-300 degrees Celsius.

23. A manufacturing method of a desulfurizing agent for a hydrocarbon comprising reducing the desulfurizing agent precursor for a hydrocarbon according to any one of claim 12 through claim 15 or the calcined desulfurizing agent precursor for a hydrocarbon according to claim 16 at a temperature of 200-300 degrees Celsius.

24. A manufacturing method of a desulfurizing agent for a hydrocarbon that is used for a fuel cell system by use of the method according to claim 23, wherein the reducing is performed on the desulfurizing agent precursor for a hydrocarbon or the calcined desulfurizing agent precursor for a hydrocarbon with which a desulfurization reactor for a fuel cell system is filled.

25. A hydrocarbon desulfurization method for exposing the desulfurizing agent for a hydrocarbon according to any one of claim 17 through claim 19 to a hydrocarbon containing a sulfur compound.

26. The hydrocarbon desulfurization method according to claim 25, wherein the hydrocarbon is kerosene.

27. A fuel cell system that uses a hydrocarbon as a raw fuel comprising a hydrocarbon desulfurizing apparatus(5) having a reactor filled with the desulfurizing agent for a hydrocarbon according to any one of claim 17 through claim 19.
